# EUROPEAN PATENT APPLICATION

(11) **EP 1 901 217 A1**
(43) Date of publication of application: **19.03.2008**
(21) Application number: 06746725.8
(22) Date of filing: 23.05.2006
(51) Int. Cl.: G06Q 10/00

(54) **COST ELEMENT MANAGING SYSTEM**

(30) Priority: 26.05.2005 JP 2005153459
(71) Applicant: Class Technology Co., Ltd., Shibuya-ku, Tokyo 151-0053 (JP)
(72) Inventor: YOTSUKURA, Mikio, c/o Class Technology Co., Ltd., Tokyo 1510053 (JP)
(74) Representative: Townsend, Stephen
(86) International application number: PCT/JP2006/310191
(87) International publication number: WO 2006/126509

(57) **Abstract**

A cost element managing system is provided, in which a hierarchically-structured database can be constructed based on cost elements, and the hierarchically-structured database as of any given point in the past or at the present can be generated and outputted in real time.

In a cost element managing system 10, cost elements classified into primary to n-ary cost element groups are memorized chronologically from the past to the present, and the cost elements memorized from the past to the present are used to construct a plurality of hierarchically-structured databases in which the cost elements are systematically related. The system 10 includes database generation means for generating, in real time, a hierarchically-structured database as of any given point in the past or at the present, and database output means for outputting the generated hierarchically-structured database in real time.

## Description

### TECHNICAL FIELD

The present invention relates to a cost element managing system in which a computer resource is used to manage cost elements that are to be included in costs and categorized from the highest to the lowest-level concepts.

### BACKGROUND ART

There is a cost managing system for performing cost management concerning goods and services per accepted contract for business operations that are to be provided (see Patent Document 1). In this system, cost elements that represent individual labor costs for the business operations that are to be provided are added together with cost elements that represent operation processes for the labor costs, and the labor costs are calculated per operation process. The system makes it possible to comprehend costs per operation process, and thereby to determine unnecessary operation processes or inefficient operation processes. Of all the cost elements, material cost, labor cost, operating expenses, etc., are inputted in real time upon each occurrence, and when any material cost, labor cost, operating expenses, etc., are inputted anew, the inputted cost elements are sequentially integrated with cost elements that have already been memorized in the system, thereby updating a cost database. In this system, current costs are aggregated for the inputted cost elements, and the result of cost aggregation is presented as a line graph on a display.
[Patent Document 1] Japanese Laid-Open Patent Publication No. 2003-296557

### DISCLOSURE OF THE INVENTION

### PROBLEMS TO BE SOLVED BY THE INVENTION

In the cost managing system disclosed in the above publication, the inputted cost elements are memorized in an integrated state, and the memorized cost elements form a cost database for current goods and services. In the system, however, the cost elements do not form a hierarchically-structured database such that the cost elements are systematically related in order from the highest to the lowest-level concepts, and furthermore, the individual cost elements are not managed chronologically from the past to the present, so that a cost database as of any given point from among databases that have been present from the past up to the present cannot be generated and outputted in real time as a hierarchically-structured database. Also, in the system, the cost elements are sequentially integrated and updated, and no pre-update cost databases remain in the system, so that cost databases or cost elements as of any given points in the past cannot be retroactively modified.

An objective of the present invention is to provide a cost element managing system capable of constructing a hierarchically-structured database based on cost elements, and generating and outputting, in real time, a hierarchically-structured database as of any given point in the past or at the present. Another objective of the invention is to provide a cost element managing system capable of freely and retroactively modifying the cost elements and the hierarchically-structured database.

### SOLUTION TO THE PROBLEMS

The basis of the present invention for solving the above problems is a cost element managing system for managing cost elements to be included in costs using a computer resource, the cost elements being categorized from highest to lowest-level concepts.

The invention on the above basis has the following features. In the cost element managing system, the cost elements are classified into primary to n-ary cost element groups in order from highest to lowest levels, such that the primary cost element group encompasses the highest-level concepts, and the n-ary cost element group encompasses the lowest-level concepts, and the cost elements classified into the primary to n-ary cost element groups are memorized in the system chronologically from past to present. The system is capable of constructing a plurality of hierarchically-structured databases based on the cost elements memorized from the past up to the present, such that the cost elements are systematically related to one another in order from the primary to the n-ary cost element group, and the system comprises: database generation means for generating, in real time, a hierarchically-structured database as of any given point in the past or at the present; and database output means for outputting the generated hierarchically-structured database in real time.

In an exemplary embodiment of the invention, the database generation means is capable of generating, in real time, the hierarchically-structured database with at least one classification from among the primary to n-ary cost element groups, and the database output means is capable of outputting, in real time, the hierarchically-structured database generated with at least one classification from among the primary to n-ary cost element groups.

In another exemplary embodiment of the invention, the cost element managing system is such that a start indicator is set per cost element to indicate a point at which the cost element has been integrated into the hierarchically-structured database, and an end indicator is set for a cost element excluded from the hierarchically-structured database to indicate a point at which the cost element has been excluded from the hierarchically-structured database, so that the start indicator and the end indicator are used in the system to manage the hierarchically-structured databases and the cost elements chronologically from the past to the present.

In another exemplary embodiment of the invention, the cost element managing system comprises cost element modification means for modifying the cost elements currently or retroactively, and when a cost element is retroactively modified by the modification means, cost elements that have been present since the modification of the cost element up to the present and are to be modified to accord with the modified cost element are automatically erased from the system.

In another exemplary embodiment of the invention, the cost element managing system comprises cost element modification means for modifying the cost elements currently or retroactively, and when a cost element that belongs to a high-level concept is modified currently or retroactively by the modification means, cost elements within lower-level concepts that have been present since the modification of the cost element up to the present and are to be modified to accord with the modified cost element are automatically erased from the system.

In another exemplary embodiment of the invention, the modification of the cost element is addition to, changing, or deletion of the cost element.

### EFFECT OF THE INVENTION

The cost element managing system according to the present invention is capable of constructing a plurality of hierarchically-structured databases as of different points, either in the past or both in the past and present, based on cost elements classified from the primary cost element group (cost element group for the highest-level concepts) to the n-ary cost element group (cost element group for the lowest-level concepts), a hierarchically-structured database as of any given point in the past or at the present can be generated in real time by the database generation means, and the generated hierarchically-structured database can be outputted in real time by the database output means. The system generates and outputs hierarchically-structured databases as of any given points, either in the past or both in the past and present, thereby making it possible to weigh, as necessary, hierarchically-structured databases and cost elements as of different points in time. The system makes it possible to clarify systematic connections between the cost elements based on the generated hierarchically-structured databases, and thereby to carry out suitable accounting analysis based on the hierarchically-structured databases and the cost elements.

With the database generation means capable of generating, in real time, the hierarchically-structured database with at least one of the classifications from the primary to n-ary cost element groups, and the database output means capable of outputting, in real time, the hierarchically-structured database generated with at least one of the classifications from the primary to n-ary cost element groups, the system is capable of generating and outputting an individual hierarchically-structured database with any necessary group(s) from among the primary to n-ary cost element groups. This system makes it possible to clarify relative connections between the cost elements within the cost element groups based on the hierarchically-structured database, and thereby to carry out suitable and reliable cost analysis based on the hierarchically-structured database and the cost elements.

With the start indicator and the end indicator being set per cost element to respectively indicate points of integration into and exclusion from a hierarchically-structured database, the system clarifies the points at which the cost element has been integrated into and excluded from the hierarchically-structured database, so that a period during which a given cost element has been contained in the hierarchically-structured database can be identified, making it possible to reliably manage hierarchically-structured databases and cost elements chronologically from the past to the present using the start indicator and the end indicator.

The system includes the cost element modification means for modifying the cost elements currently or retroactively, such that, when a cost element is retroactively modified, cost elements that have been present since the modification of the cost element up to the present and are to be modified to accord with the modified cost element are automatically modified, and the system is capable of freely modifying the cost elements as of any point in the past or at the present, and constructing a hierarchically-structured database as of any point in the past or at the present based on the modified cost elements. In this system, when a given cost element is retroactively modified, it is not necessary to individually modify all cost elements that have been present since the modification of the cost element up to the present and are associated with the cost element, and therefore it is possible to prevent an error from occurring due to individual modification of all the cost elements, as well as to prevent the procedure from becoming complicated.

The system includes the cost element modification means for modifying the cost elements currently or retroactively, such that, when a cost element that belongs to a high-level concept is modified currently or retroactively by the modification means, other cost elements within lower-level concepts that have been present since the modification of the cost element up to the present and are to be modified to accord with the modified cost element are automatically erased, and the system is capable of freely modifying cost elements as of any given point in the past or at the present, and constructing a hierarchically-structured database as of any given point in the past or at the present based on the modified cost elements. The cost elements within the lower-level concepts that are to be modified with the modified cost element that belongs to the high-level concept do not remain in the system, and the cost elements within the lower level concepts that are to be modified to accord with the modification of the cost element within the high-level concept are not contained in the hierarchically-structured database, so that it is possible to prevent an erroneous hierarchically-structured database from being generated during a period from the modification of the cost element up to the present.

In the system where the modification of the cost element is addition to, changing, or deletion of the cost element, even if any cost element that is to be memorized in the system is missing, it is possible to freely add that missing cost element; even if any cost element present at a point in the past is erroneous, it can be changed to a correct cost element; and furthermore, even if any unnecessary cost element is memorized in the system, it is possible to retroactively delete that unnecessary cost element from the system.

### BRIEF DESCRIPTION OF THE DRAWINGS

[FIG. 1] FIG. 1 is a configuration diagram of an exemplary cost element managing system.
[FIG. 2] FIG. 2 is a diagram of a hierarchically-structured database as of May 1, xx.
[FIG. 3] FIG. 3 is a schematic diagram for masters, which corresponds to FIG. 2.
[FIG. 4] FIG. 4 is a diagram of a hierarchically-structured database as of May 11, xx.
[FIG. 5] FIG. 5 is a schematic diagram for the masters, which corresponds to FIG. 4.
[FIG. 6] FIG. 6 is a diagram of a hierarchically-structured database as of May 21, xx.
[FIG. 7] FIG. 7 is a schematic diagram for the masters, which corresponds to FIG. 6.
[FIG. 8] FIG. 8 is a diagram of a hierarchically-structured database as of June 1, xx.
[FIG. 9] FIG. 9 is a schematic diagram for the masters, which corresponds to FIG. 8.
[FIG. 10] FIG. 10 is a diagram of a hierarchically-structured database where cost elements are retroactively modified.
[FIG. 11] FIG. 11 is a schematic diagram for the masters, which corresponds to FIG. 10.
[FIG. 12] FIG. 12 is a diagram of the hierarchically-structured database as of June 1, xx continued from FIG. 10.

### DESCRIPTION OF THE REFERENCE CHARACTERS

- 1: cost element managing system
- 2: personal computer (computer resource)
- 3: input/output interface
- 4: general accounting system
- 5: production managing system
- 6: purchase managing system
- 7: inventory managing system
- 8: auxiliary memory device
- 9: input device
- 10: output device
- 11: control unit
- 12: arithmetic unit
- 13: central processing unit
- 14: main memory device
- 15: cost item master
- 16: cost configuration master
- 17: inventory master

### BEST MODE FOR CARRYING OUT THE INVENTION

Referring to the accompanying drawings, a cost element managing system according to the present invention will be described in detail below.

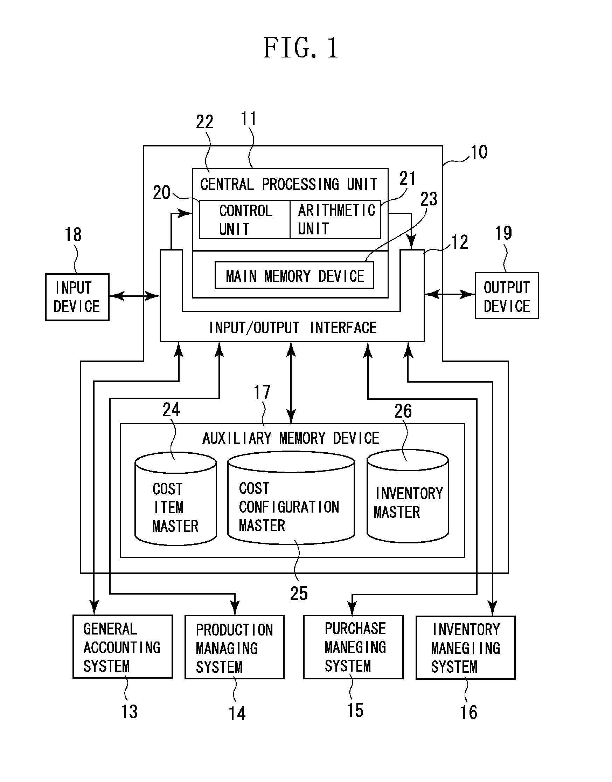

FIG. 1 is a configuration diagram of an exemplary cost element managing system 10. The system 10 uses a personal computer 11 (a computer resource) to manage cost elements that are to be included in costs and categorized into primary to n-ary cost element groups. Here, cost elements that belong to the primary cost element group are those within the highest-level concepts, cost elements that belong to the n-ary cost element group are those within the lowest-level concepts, and cost elements in the intermediate concept range belong to the secondary to (n-1)-ary cost element groups between the primary cost element group and the n-ary cost element group. As shown in FIG. 1, the system 10 is connected to other complementary systems via an input/output interface 12. The other systems include a general accounting system 13, a production managing system 14, a purchase managing system 15, and an inventory managing system 16.

The system 10 is composed of the computer 11, and an auxiliary memory device 17 connected to the computer 11 via the input/output interface 12. The computer 11 is connected to an input device 18 and an output device 19 via the input/output interface 12. The computer 11 is composed of a central processing unit 22 (CPU), which includes a control unit 20 and an arithmetic unit 21, and a main memory device 23 having a predetermined application program stored therein. In the system 10, a predetermined operating system is activated from the application program to execute database generation means, database output means, cost element modification means, etc., which will be described later, in accordance with the operating system. The auxiliary memory device 17 includes a cost item master 24 for individually memorizing cost elements, a cost configuration master 25 for memorizing systematic consolidated relationships between the cost elements, and an inventory master 26 for memorizing inventory information concerning common stock parts, inventory days, warehousing expenses, etc. The cost item master 24 manages information concerning the individual cost elements. The cost configuration master 25 manages information concerning the consolidations between the cost elements. A keyboard, a ten-key unit, a scanner, or the like, is used as the input device 18. A liquid crystal display, a CRT, a printer, or the like, is used as the output device 19. As with the cost element managing system 10, the general accounting system 13, the production managing system 14, the purchase managing system 15, and the inventory managing system 16 execute processes using a personal computer. The systems 13, 14, 15, and 16 are each composed of a computer, which includes a central processing unit and a main memory device, as well as an input device and an output device, which are connected to the computer via an input/output interface (not shown).

The main memory device 23 has pre-memorized therein a plurality of cost element specifying items, each specifying an individual cost element. Examples of the cost element specifying items include direct and indirect expenses. The direct expenses include direct material cost, direct labor cost, and direct operating expenses. The direct material cost includes main material cost (raw material cost), and purchased material cost. The direct labor cost includes direct wages. The direct operating expenses include subcontract processing expenses. The indirect expenses include indirect material cost, indirect labor cost, indirect operating expenses, etc. The indirect material cost includes auxiliary material cost, factory supplies cost, consumable tools, fixtures, and equipment cost, etc. The indirect labor cost includes indirect operation cost, indirect labor charges, cash on hand for wages, leave allowances, salary, employee bonuses, reserve for retirement allowances, and welfare expenses (contribution to health insurance expenses, etc.). The indirect operating expenses include contribution to welfare facilities, benefit cost, depreciation expenses, rental expenses, insurance premiums, repair expenses, electric power charges, gas charges, water charges, taxes and public charges, traveling and transportation expenses, communications expenses, warehousing expenses, inventory shortage, and miscellaneous expenses. The indirect expenses and the processing expenses are allocated in accordance with cost accounting standards. Note that the cost element specifying items are not limited to those as illustrated, and other items can be stored to the main memory device 23 as cost element specifying items.

In addition to the cost element specifying items memorized in the main memory device 23, the system 10 can set a plurality of new cost element items for newly and arbitrarily specifying the cost elements. The new cost element items are inputted to the system 10 via a keyboard, a ten-key unit, or a scanner, and memorized to the main memory device 23. In the system 10, new cost element items are not particularly restricted, and can be arbitrarily and freely set in accordance with cost accounting standards, and the new cost element items being set can be memorized to the main memory device 23. In the system 10, the cost element specifying items and the new cost element items can be extracted in real time from the main memory device 23, and by using the extracted cost element specifying items and new cost element items and setting costs (values) for the items, it is possible to construct a hierarchically-structured database in which the items and the costs are systematically related. Each item and a cost corresponding thereto form a cost element.

In the system 10, the cost element specifying items and the new cost element items are invoked from the main memory device 23 and displayed on a liquid crystal display or a CRT, and a mouse is used to select the items, and drag and drop them into a cost item entry area (not shown) displayed on the screen, while entering the cost of each item to a cost value entry area (not shown) before specifying the cost elements. In addition, the new cost element items are entered to the cost item entry area via a keyboard, while entering the cost of each new item to the cost value entry area before specifying the cost elements. The cost item entry area and the cost value entry area are displayed on the screen with classifications from the primary to the n-ary cost element groups. When the items are entered to the cost item entry area, a primary flag representing the primary cost element group, a secondary flag representing the secondary cost element group, or an n-ary flag representing the n-ary cost element group is automatically set for each item. In addition, when the costs are entered to the cost value entry area, a primary flag, a secondary flag, or an n-ary flag is automatically set for each cost.

The central processing unit 22 outputs the items and the costs to the auxiliary memory device 17 with the classifications from the primary to n-ary cost element groups based on the primary to n-ary flags, thereby memorizing the items and the costs to the device 17. In accordance with an instruction from the central processing unit 22, the auxiliary memory device 17 stores the items and the costs associated with their respective items to the cost item master 24 with the classifications from the primary to n-ary cost element groups (cost element memory means). The items and the costs are memorized to the master 24 chronologically from the past to the present. Next, in the system 10, systematic consolidated relationships between the items are entered to a consolidated relationship entry area (not shown) displayed on the screen. The central processing unit 22 outputs the consolidated relationships between the items to the auxiliary memory device 17, thereby memorizing the consolidated relationships to the device 17. In accordance with an instruction from the central processing unit 22, the auxiliary memory device 17 stores the consolidated relationships to the cost configuration master 25 (cost element memory means). The consolidated relationships between the items are memorized in the master 25 chronologically from the past to the present.

In an example of memorizing cost element specifying items, new cost element items, costs, and consolidated relationships to the master 24, 25, at the present time point, the items and the costs are respectively entered to the cost item entry area and the cost value entry area, the consolidated relationships between the items are entered to the consolidated relationship entry area, and a start indicator that indicates the present time point (a start indicator that indicates a point at which the cost element has been integrated into the hierarchically-structured database) is entered to a start indicator entry area (not shown) displayed on the screen. After setting the start indicator for each item, the central processing unit 22 outputs the items, the costs, and the consolidated relationships between the items to the auxiliary memory device 17, thereby memorizing them to the device 17. In accordance with an instruction from the central processing unit 22, the auxiliary memory device 17 stores the items for which the start indicator has been set and the costs to the master 24, while storing the consolidated relationships to the master 25. Note that the costs are associated with their respective items, and therefore by setting the consolidated relationships and the start indicator for the items, consolidated relationships between the costs and the point of integration into the hierarchically-structured database are clarified. Therefore, as for the costs, it is not necessary to input their consolidated relationships and start indicator.

In the system 10, new items and costs can be added to the master 24, 25, which has some items and costs memorized therein, at the present time point (cost element modification means), and the items and the costs that have already been memorized in the master 24, 25, can be changed or deleted at the present time point (cost element modification means). In an example of adding cost element specifying items, new cost element items, and costs to the master 24, 25, at the present time point, the items and costs that are to be added are respectively entered to the cost item entry area and the cost value entry area, consolidated relationships between the added items and other items are entered to the consolidated relationship entry area, and a start indicator that indicates the present time point (the time of addition) is entered to the start indicator entry area. After setting the start indicator for each of the added items, the central processing unit 22 outputs the added items and costs, along with the consolidated relationships between the added items and other items, to the auxiliary memory device 17, thereby memorizing them to the device 17. In accordance with an instruction from the central processing unit 22, the auxiliary memory device 17 stores the added items, for which the start indicator has been set, and the added costs to the master 24, while storing the consolidated relationships to the master 25. Each time an item and a cost are added at the present time point, the contents memorized in the master 24, 25, are updated, but the contents memorized before the addition (before the updating) are maintained in the master 24, 25, as memorized records.

In an example of changing cost element specifying items, new cost element items, and costs that have been memorized in the master 24, 25, at the present time point, the items that are to be changed are displayed and changed in the cost item entry area, and the costs that are to be changed are displayed and changed in the cost value entry area. Furthermore, consolidated relationships between the changed items and other items are entered to the consolidated relationship entry area, a start indicator that indicates the present time point (the time of changing) is entered to the start indicator entry area, and an end indicator that indicates the present time point (the time of changing or a point prior to the time of changing) (an end indicator that indicates a point at which the cost elements have been excluded from the hierarchically-structured database) is entered to an end indicator entry area (not shown) displayed on the screen. When items and costs that belong to high-level concepts are changed at the present time point, the central processing unit 22 automatically erases, from the master 24, 25, items and costs that belong to lower-level concepts and are to be changed to accord with the changed items and costs within the high-level concepts, and automatically sets an end indicator for the erased items within the lower-level concepts (automatic modification means). In a concrete example of this, when items and costs that belong to the secondary cost element group are changed, other items and costs in the tertiary and subsequent cost element groups that are to be changed to accord with the changed items and costs are erased from the master 24, 25, and an end indicator is set for those erased other items in the tertiary and subsequent cost element groups. New items and costs within the lower-level concepts that are associated with the changed items and costs are respectively reentered to the cost item entry area and the cost value entry area, consolidated relationships between the items are entered to the consolidated relationship entry area, and a start indicator for the items is entered to the start indicator entry area.

After setting the end indicator for each of the pre-change items and the start indicator for each of the changed items, the central processing unit 22 outputs the pre-change items and their costs, the changed items and their costs, and consolidated relationships between the changed items and other items to the auxiliary memory device 17, thereby memorizing them to the device 17. In accordance with an instruction from the central processing unit 22, the auxiliary memory device 17 stores to the master 24 the items for which the end indicator has been set and their costs, as well as the items for which the end indicator has been set and their costs, while storing the consolidated relationships to the master 25. Each time an item and a cost are changed at the present time point, the contents memorized in the master 24, 25, are updated, but the contents memorized before the changing (before the updating) are maintained in the master 24, 25, as memorized records. Note that the cost is associated with the item, and therefore by setting the end indicator for the item, a point at which the cost has been excluded from the hierarchically-structured database is clarified. Therefore, as for the cost, it is not necessary to set the end indicator. The start indicator and the end indicator are in units representing time, which may be a date or a date and time. The time may be in units of hour, minute, or second.

In an example of deleting cost element specifying items, new cost element items, and costs that have been memorized in the master 24, 25, at the present time point, the items that are to be deleted are displayed and deleted in the cost item entry area, and the costs that are to be deleted are displayed and deleted in the cost value entry area. Furthermore, an end indicator that indicates the present time point (the time of deletion) is entered to the end indicator entry area. When items and costs that belong to high-level concepts are deleted at the present time point, the central processing unit 22 automatically erases, from the master 24, 25, items and costs that belong to lower-level concepts and are to be deleted to accord with the deleted items and costs within the high-level concepts, and automatically sets an end indicator for the erased items within the lower-level concepts (automatic modification means). In a concrete example of this, when items and costs that belong to the secondary cost element group are deleted, other items and costs in the tertiary and subsequent cost element groups that are to be deleted to accord with the deleted items and costs are erased from the master 24, 25, and an end indicator is set for the erased other items in the tertiary and subsequent cost element groups. After setting the end indicator for each of the deleted items, the central processing unit 22 outputs the deleted items and their costs to the auxiliary memory device 17, thereby memorizing them to the device 17. In accordance with an instruction from the central processing unit 22, the auxiliary memory device 17 memorizes the deleted items for which the end indicator has been set and their costs to the master 24. Each time an item and a cost are deleted at the present time point, the contents memorized in the master 24, 25, are updated, but the contents memorized before the deletion (before the updating) are maintained in the master 24, 25, as memorized records.

In the system 10, new items and costs can be added to the master 24, 25, which has some items and costs memorized therein, retroactively from the present (cost element modification means), and the items and costs that have already been memorized in the master 24, 25, can be changed/deleted retroactively from the present (cost element modification means). In examples of retroactively adding, changing or deleting cost element specifying items, new cost element items, and costs, a given point in the past is entered to a time entry area (not shown). When the given point in the past is entered, the contents memorized in the master 24, 25 (memorized records) are displayed on the screen of the output device 19 retroactively to the given point in the past, and the cost item entry area, the cost value entry area, the consolidated relationship entry area, the start indicator entry area, and the end indicator entry area for the given point in the past are displayed on the screen of the output device 19.

In an example of retroactively adding cost element specifying items, new cost element items, and costs to the master 24, 25, the items and costs that are to be added are entered to the cost item entry area and the cost value entry area for a given point in the past, consolidated relationships between the added items and other items are entered to the consolidated relationship entry area for the given point in the past, and a start indicator that indicates the given point in the past (a start indicator that indicates a point at which the cost element has been integrated into the hierarchically-structured database) is entered to the start indicator entry area. After setting the start indicator for each of the added items, the central processing unit 22 outputs the added items and costs, along with consolidated relationships between the added items and other items, to the auxiliary memory device 17, thereby memorizing them to the device 17. In accordance with an instruction from the central processing unit 22, the auxiliary memory device 17 refers to time data for the start indicator to store the added items, for which the start indicator has been set, and the costs to the records memorized in the master 24 retroactively to the time of addition in the past, while storing the consolidated relationships to the records memorized in the master 25 retroactively to the time of addition in the past. By retroactively adding the items and the costs, the added items, along with their costs and consolidated relationships, are incorporated into the contents currently memorized in the master 24, 25, and also into the memorized records that have been present since the time of addition up to the present, so that all the memorized records that have been present since the time of addition up to the present are updated (automatic modification means). The records memorized before the addition are maintained in the master 24, 25, without any modification.

In an example of retroactively changing cost element specifying items, new cost element items, and costs that are memorized in the master 24, 25, the items that are to be changed are displayed and changed in the cost item entry area for a given point in the past, and the costs that are to be changed are displayed and changed in the cost value entry area for the given point in the past. Furthermore, consolidated relationships between the changed items and other items are entered to the consolidated relationship entry area for the given point in the past, a start indicator that indicates the given point in the past is entered to the start indicator entry area, and an end indicator that indicates the given point in the past is entered to the end indicator entry area. When items and costs that belong to high-level concepts are retroactively changed, the central processing unit 22 automatically erases items and costs within lower-level concepts that have been present since the time of changing up to the present and are to be changed to accord with the changed items and costs within the high-level concepts, and automatically sets the end indicator for the erased items within the lower-level concepts (automatic modification means). In a concrete example of this, when items and costs that belong to the secondary cost element group are changed, other items and costs in the tertiary and subsequent cost element groups that have been present since the time of changing up to the present and are to be changed to accord with the changed items and costs are erased from the master 24, and the end indicator is set for the erased items in the tertiary and subsequent cost element groups. New items and costs within lower-level concepts that are associated with the changed items and costs are respectively reentered to the cost item entry area and the cost value entry area, consolidated relationships between the items are entered to the consolidated relationship entry area, and a start indicator for the items is entered to the start indicator entry area. The new items and costs within the lower-level concepts that are associated with the changed items and costs are processed as additions.

After setting the end indicator for each of the pre-change items, and setting the start indicator for each of the changed items, the central processing unit 22 outputs the pre-change items and their costs, the changed items and their costs, and consolidated relationships between the changed items and other items to the auxiliary memory device 17, thereby memorizing them to the device 17. In accordance with an instruction from the central processing unit 22, the auxiliary memory device 17 stores the items for which the end indicator has been set and their costs, as well as the items for which the start indicator has been set and their costs, to the records memorized in the master 24 retroactively to the time of changing in the past, while storing the consolidated relationships to the records memorized in the master 25, retroactively to the time of changing in the past. By retroactively changing the items and the costs, the changed items, and their costs and consolidated relationships are incorporated into the contents currently memorized in the master 24, 25, and also into the contents that have been memorized since the time of changing up to the present, so that all the memorized records that have been present since the time of changing up to the present are updated (automatic modification means). That is, items and costs in the same cost element group as the changed items and costs that have been present since the time of changing up to the present and are to be changed to accord with the changed items and costs are automatically changed. The records memorized before the changing are maintained in the master 24, 25, without any modification.

In an example of retroactively deleting cost element specifying items, new cost element items, and costs that are memorized in the master 24, 25, the items that are to be deleted are displayed and deleted in the cost item entry area for a given point in the past, and the costs that are to be deleted are displayed and deleted in the cost value entry area for the given point in the past. Furthermore, an end indicator that indicates the given point in the past is entered to the end indicator entry area. When items and costs that belong to high-level concepts are retroactively deleted, the central processing unit 22 automatically erases, from the master 24, items and costs within lower-level concept groups that have been present since the time of deletion up to the present and are to be deleted to accord with the deleted items and costs within the high-level concepts, and automatically sets the end indicator for the erased items within the lower-level concepts (automatic modification means). In a concrete example of this, when items and costs that belong to the secondary cost element group are deleted, other items and costs in the tertiary and subsequent cost element groups that have been present since the time of deletion up to the present and are to be deleted to accord with the deleted items and costs are deleted from the master 24, 25, and the end indicator is set for the erased other items in the tertiary and subsequent cost element groups.

After setting the end indicator for each of the deleted items, the central processing unit 22 outputs the deleted items and their costs to the auxiliary memory device 17, thereby memorizing them to the device 17. In accordance with an instruction from the central processing unit 22, the auxiliary memory device 17 stores the deleted items for which the end indicator has been set and their costs to the records memorized in the master 24 retroactively to the time of deletion. When the items and the costs are retroactively deleted, the items that are to be deleted, and their costs and consolidated relationships are deleted from the contents currently memorized in the master 24, 25, and also from the records that have been memorized since the time of deletion up to the present, so that all the memorized records that have been present since the time of deletion up to the present are updated (automatic modification means). That is, items and costs in the same cost element group as that of the deleted items and costs that have been present since the time of deletion up to the present, and are to be deleted to accord with the deleted items and costs are automatically deleted. The records that have been memorized before the deletion are maintained in the master 24, 25, without any modification.

For example, of all the monthly manufacturing costs, the general accounting system 13 aggregates direct labor cost, indirect manufacturing cost, overhead, and subsidy for each department (manufacturing departments and their subsidiary departments), and memorizes the aggregated costs to the main memory unit. In accordance with a transfer request from the cost element managing system 10, each cost aggregated by the general accounting system 13 is outputted from the system 13 to the system 10. In the general accounting system 13, the overheads per department are allocated to the departments for which the individual costs have been recorded, and the subsidiary department costs are allocated to the manufacturing department. Allocation of the overheads per department is processed prior to the allocation process of the subsidiary department costs. In the allocation process of the overheads per department, the department overheads are separated from the subsidiary department costs to define which overhead is common among which manufacturing or subsidiary departments, and thereafter the overheads are each added to the same account item for the department that is to bear the overhead as for the department for which the overhead has been recorded. The subsidiary department cost allocation process is carried out in accordance with direct allocation, cross allocation, or cascade cost allocation.

By way of example, the production managing system 14 holds data for article, manufacturing order, product configuration, progress schedule chart, and standard time per article, and also holds data for actual production related to products and goods for which processing has been finished up to the intermediate stage. In accordance with a transfer request from the cost element managing system 10, the data being held by the production managing system 14 is outputted from the system 14 to the system 10. By way of example, the purchase managing system 15 holds purchase data for raw materials and parts, delivery data for goods processed by subcontractors, and payment data for subcontract processing expenses. In accordance with a transfer request from the cost element managing system 10, the data being held by the purchase managing system 15 is outputted from the system 15 to the system 10. By way of example, the inventory managing system 16 holds data not only for inventory goods but also for the quantity of raw materials actually consumed, transfer to other accounts, and the balances of inventory at the beginning and the end of the month. The inventory managing system 16 manages arrival dates of inventory goods based on lot numbers of the inventory goods. In accordance with a transfer request from the cost element managing system 10, the data being held by the inventory managing system 16 is outputted from the system 16 to the system 10.

The system 10 can extract data held by the general accounting system 13, the production managing system 14, the purchase managing system 15, and the inventory managing system 16 in real time from the systems 13, 14, 15, and 16, and memorize the extracted data to the main memory device 23 as specific cost elements. The system 10 uses the data from the other systems 13, 14, 15, and 16, and sets costs for the data, thereby making it possible to construct a hierarchically-structured database such that the data and the costs are systematically related. A piece of data and a cost related to that piece of data form a cost element. Note that the system 10 can construct a hierarchically-structured database using cost element specifying items, new cost element items, and the data from the other systems 13, 14, 15, and 16.

The system 10 causes the data held by the general accounting system 13, the production managing system 14, the purchase managing system 15, and the inventory managing system 16 to be read from the systems 13, 14, 15, and 16 and displayed on a liquid crystal display or a CRT, a mouse is used to select data, and drag and drop it into the cost item entry area displayed on the screen, and costs for the data are entered to the cost value entry area before specifying cost elements. The cost item entry area and the cost value entry area are displayed on the screen with classifications from the primary to n-ary cost element groups. When the data and the costs are entered to the areas, primary to n-ary flags are automatically set for the data and the costs.

Based on the primary to n-ary flags, the central processing unit 22 classifies the data and the costs into the primary to n-ary cost element groups, and outputs them to the auxiliary memory device 17, thereby memorizing the data and the costs to the device 17. In accordance with an instruction from the central processing unit 22, the auxiliary memory device 17 stores the data and the costs associated with their respective pieces of data to the cost item master 24 with the classifications from the primary to n-ary cost element groups (cost element memory means). The pieces of data and the costs are memorized to the master 24 chronologically from the past to the present. Next, in the system 10, systematic consolidated relationships between the pieces of data are entered to the cost element consolidated area displayed on the screen. The central processing unit 22 outputs the consolidated relationships between the pieces of data to the auxiliary memory device 17, thereby memorizing the consolidated relationships to the device 17. In accordance with an instruction from the central processing unit 22, the auxiliary memory device 17 stores the consolidated relationships to the cost configuration master 25 (cost element memory means). The consolidated relationships between the pieces of data are memorized to the master 25 chronologically from the past to the present.

In an example of memorizing data, costs, and consolidated relationships from the system 10 to the master 24, 25, at the present time point, the data and the costs are respectively entered to the cost item entry area and the cost value entry area, the consolidated relationships between pieces of the data are entered to the consolidated relationship entry area, and a start indicator that indicates the present time point is entered to the start indicator entry area. After setting the start indicator for each piece of data, the central processing unit 22 outputs the pieces of data, the costs, and the consolidated relationships between the pieces of data to the auxiliary memory device 17, thereby memorizing them to the device 17. In accordance with an instruction from the central processing unit 22, the auxiliary memory device 17 stores the pieces of data for which the start indicator has been set and the costs to the master 24, while storing the consolidated relationships to the master 25. Note that as with the costs for the items, it is not necessary to enter consolidated relationships and a start indicator for the costs related to the pieces of data.

In the system 10, new data and costs can be added to the master 24, 25, which has memorized some data and costs from the other systems 13, 14, 15, and 16, at the present time point (cost element modification means), and the data and the costs that have already been memorized in the master 24, 25, can be changed/deleted at the present time point (cost element modification means). In an example of adding data and costs to the master 24, 25, at the present time point, the data and costs that are to be added are respectively entered to the cost item entry area and the cost value entry area, consolidated relationships between the added data and other data are entered to the consolidated relationship entry area, and a start indicator that indicates the present time point (the time of addition) is entered to the start indicator entry area. After setting the start indicator for the added data, the central processing unit 22 outputs the added data, the costs, and the consolidated relationships between the added data and other data to the auxiliary memory device 17, thereby memorizing them to the device 17. In accordance with an instruction from the central processing unit 22, the auxiliary memory device 17 stores the added data for which the start indicator has been set and the costs to the master 24, while storing the consolidated relationships to the master 25. Each time a piece of data and a cost are added at the present time, the contents memorized in the master 24, 25, are updated, but the contents memorized before the addition (before the updating) are maintained in the master 24, 25, as memorized records.

In an example of changing data and costs that are memorized in the master 24, 25, at the present time point, the data that is to be changed is displayed and changed in the cost item entry area, and the costs that are to be changed are displayed and changed in the cost value entry area. Furthermore, consolidated relationships between the changed data and other data are entered to the consolidated relationship entry area, a start indicator that indicates the present time point (the time of changing) is entered to the entry area, and an end indicator that indicates the present time point (the time of changing or a point prior to the time of changing) is entered to the end indicator entry area. When data and costs that belong to high-level concepts are changed at the present time point, the central processing unit 22 automatically erases data and costs within lower-level concepts that are to be changed to accord with the changed data and costs within the high-level concepts, and automatically sets the end indicator for the erased data within the low-level concepts (automatic modification means). New data and costs within the low-level concepts that are associated with the changed data and costs are respectively reentered to the cost item entry area and the cost value entry area, consolidated relationships between items are entered to the consolidated relationship entry area, and the start indicator for the items is entered to the start indicator entry area.

After setting the end indicator for each piece of the pre-change data and the start indicator for each of the changed data, the central processing unit 22 outputs the pre-change data and the costs related thereto, the changed data and the costs related thereto, and the consolidated relationships between the changed data and other data to the auxiliary memory device 17, thereby memorizing them to the device 17. In accordance with an instruction from the central processing unit 22, the auxiliary memory device 17 stores, to the master 24, the data for which the end indicator has been set and the costs related thereto, as well as the data for which the start indicator has been set and the costs related thereto, while storing the consolidated relationships to the master 25. Each time a piece of data and a cost are changed at the present time point, the contents memorized in the master 24, 25, are updated, but the contents memorized before the changing (before the updating) are maintained in the master 24, 25, as memorized records. Note that as with the costs for the items, it is not necessary to set an end indicator for the costs related to the data.

In an example of deleting data and costs that are memorized in the master 24, 25, at the present time point, the data that is to be deleted is displayed and deleted in the cost item entry area, and the costs that are to be deleted are displayed and deleted in the cost value entry area. Furthermore, an end indicator that indicates the present time point (the time of deletion) is entered to the end indicator entry area. When data and costs within high-level concepts are deleted at the present time point, the central processing unit 22 automatically erases, from the master 24, data and costs within lower-level concepts that are to be deleted to accord with the deleted data and costs within the high-level concepts, and automatically sets the end indicator for the deleted data within the lower-level concepts (automatic modification means). After setting the end indicator for the deleted data, the central processing unit 22 outputs the deleted data and the costs related thereto to the auxiliary memory device 17, thereby memorizing them to the device 17. In accordance with an instruction from the central processing unit 22, the auxiliary memory device 17 memorizes, to the master 24, the deleted data for which the end indicator has been set and the costs related thereto. Each time a piece of data and a cost are deleted at the present time point, the contents memorized in the master 24, 25, are updated, but the contents memorized before the deletion (before the updating) are maintained in the master 24, 25, as memorized records.

In the system 10, new data and costs can be added to the master 24, 25, which has some data and costs memorized therein, retroactively from the present (cost element modification means), and the data and costs that have already been memorized in the master 24, 25, can be changed/deleted retroactively from the present (cost element modification means). In an example of retroactively adding data and costs to the master 24, 25, a given point in the past is entered to the time entry area, the data and costs that are to be added are respectively entered to the cost item entry area and the cost value entry area for the given point in the past, consolidated relationships between the added data and other data are entered to the consolidated relationship entry area for the given point in the past, and a start indicator that indicates the given point in the past is entered to the start indicator entry area. After setting the start indicator for the added data, the central processing unit 22 outputs the added data, the added costs, and the consolidated relationships between the added data and other data to the auxiliary memory device 17, thereby memorizing them to the device 17. In accordance with an instruction from the central processing unit 22, the auxiliary memory device 17 refers to time data for the start indicator to store the added data for which the start indicator has been set and the costs to the records memorized in the master 24 retroactively to the time of addition in the past, while storing the consolidated relationships to the records memorized in the master 25 retroactively to the time of addition in the past. By retroactively adding data and costs, the added data, as well as costs and consolidated relationships related thereto, are incorporated into the contents currently memorized in the master 24, 25, and also into the memorized records that have been present since the time of addition up to the present, so that all the memorized records that have been present since the time of addition up to the present are updated (automatic modification means). The records memorized before the addition are maintained in the master 24, 25, without any modification.

In an example of retroactively changing data and costs that are memorized in the master 24, 25, a given point in the past is entered to the time entry area, the data that is to be added is displayed and changed in the cost item entry area for a given point in the past, and the costs that are to be changed are displayed and changed in the cost value entry area for the given point in the past. Furthermore, consolidated relationships between the changed data and other data are entered to the consolidated relationship entry area for the given point in the past, a start indicator that indicates the given point in the past is entered to the start indicator entry area, and an end indicator that indicates the given point in the past is entered to the end indicator entry area. When data and costs within high-level concepts are retroactively changed, the central processing unit 22 automatically erases data and costs within lower-level concepts that have been present since the time of addition up to the present and are to be changed to accord with the changed data and costs within the high-level concepts, and automatically sets the end indicator for the erased data within the lower-level concepts (automatic modification means). New data and costs within the lower-level concepts that are associated with the changed data and costs are respectively reentered to the cost item entry area and the cost value entry area, consolidated relationships between pieces of the data are entered to the consolidated relationship entry area, and a start indicator therefor is entered to the start indicator entry area. New data and costs within the lower-level concepts that are associated with the changed data and costs are processed as additions.

After setting the end indicator for each piece of the pre-change data, and the start indicator for each of the changed data, the central processing unit 22 outputs the pre-change data and the costs related thereto, the changed data and the costs related thereto, and the consolidated relationships between the changed data and other data to the auxiliary memory device 17, thereby memorizing them to the device 17. In accordance with an instruction from the central processing unit 22, the auxiliary memory device 17 stores, to the records memorized in the master 24, the data for which the end indicator has been set and the costs related thereto, as well as the data for which the start indicator has been set and the costs related thereto, retroactively to the time of changing in the past, while storing the consolidated relationships to the records memorized in the master 25 retroactively to the time of changing in the past. By retroactively changing data and costs, the changed data, along with the costs and consolidated relationships related thereto, are incorporated into the contents currently memorized in the master 24, 25, and also into the memorized records that have been present since the time of changing up to the present, so that all the memorized records that have been present since the time of changing up to the present (automatic modification means). The records memorized before the changing are maintained in the master 24, 25, without any modification.

In an example of retroactively deleting data and costs that are memorized in the master 24, 25, a given point in the past is entered to the time entry area, the data that is to be deleted is displayed and deleted in the cost item entry area for the given point in the past, and the costs that are to be deleted are displayed and deleted in the cost value entry area for the given point in the past. Furthermore, an end indicator that indicates the given point in the past is entered to the end indicator entry area. When data and costs within high-level concepts are retroactively deleted, the central processing unit 22 automatically erases, from the master, data and costs within lower-level concepts that have been present since the time of deletion up to the present and are to be deleted to accord with the deleted data and costs within the high-level concepts, and automatically sets the end indicator for the deleted data within the lower-level concepts (automatic modification means).

After setting the end indicator for the deleted data, the central processing unit 22 outputs the deleted data and the costs related thereto to the auxiliary memory device 17, thereby memorizing them to the device 17. In accordance with an instruction from the central processing unit 22, the auxiliary memory device 17 stores, to the records memorized in the master 24, the deleted data for which the end indicator has been set and the costs related thereto retroactively to the time of deletion in the past. By retroactively deleting data and costs, the data that is to be deleted, as well as the costs and consolidated relationships related thereto, are deleted from the contents currently memorized in the master 24, 25, and also from the memorized records that have been present since the time of deletion up to the present, so that all the memorized records that have been present since the time of deletion up to the present (automatic modification means). The records memorized before the deletion are maintained in the master 24, 25, without any modification.

After items, data, costs, a start indicator, and an end indicator are memorized to the master 24, and consolidated relationships between the items, consolidated relationships between the items and the data, and consolidated relationships between each piece of the data are memorized to the master 25, when any given point in the past or the present time point is entered to the time entry area, and a hierarchically-structured database generation request is inputted, the system 10 generates, in real time, a hierarchically-structured database using the cost elements for the given point based on the entered consolidated relationships (database generation means). In addition, when a hierarchically-structured database output request is inputted, the generated hierarchically-structured database is outputted in real time via the output device 19 (database output means). The system makes it possible to generate a plurality of hierarchically-structured databases for any given points, either in the past or both in the past and present, based on items, data, and costs that have been memorized in master 24, 25, from the past up to the present.

The system 10 makes it possible to generate a hierarchically-structured database in real time with at least one element group from among classifications from the primary to n-ary cost element groups (database generation means), and to output, in real time, the hierarchically-structured database generated with at least one element group from among the classifications from the primary to n-ary cost element groups (database output means). Here, generating and outputting a hierarchically-structured database with at least one element group from among the classifications from the primary to n-ary cost element groups means, for example, that when cost elements are memorized in the master with classifications from the primary to septenary cost element groups, a hierarchically-structured database is generated and outputted with only the secondary cost element group, the primary to quaternary cost element groups, or the tertiary, quinary, and septenary cost element groups.

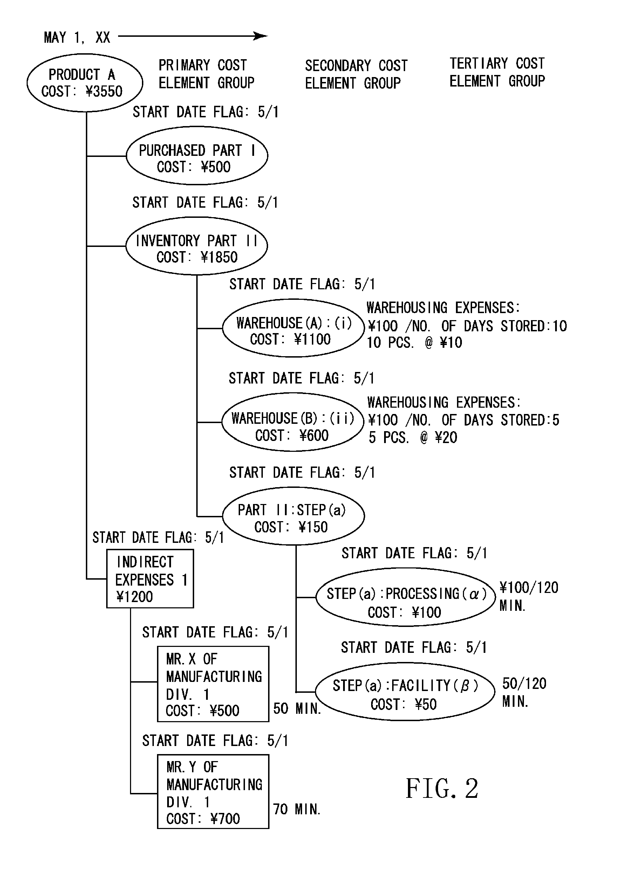

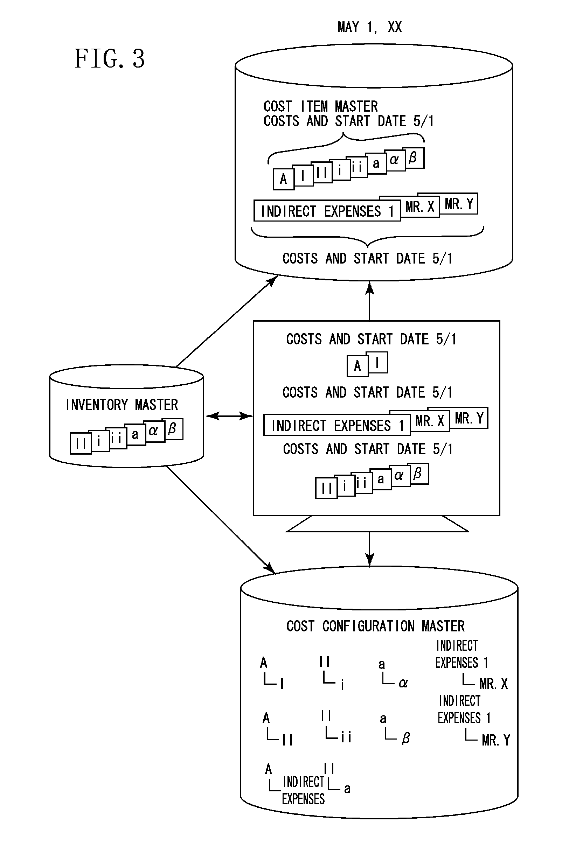

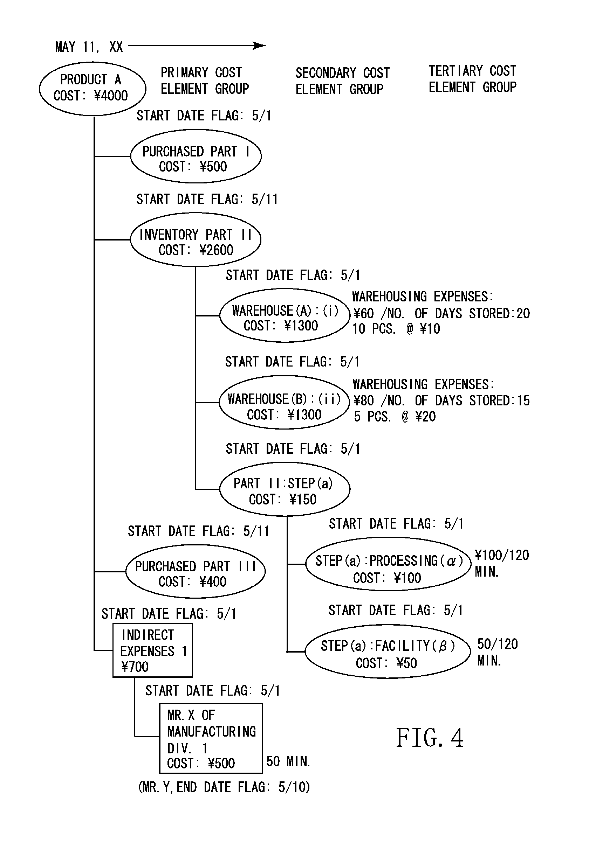

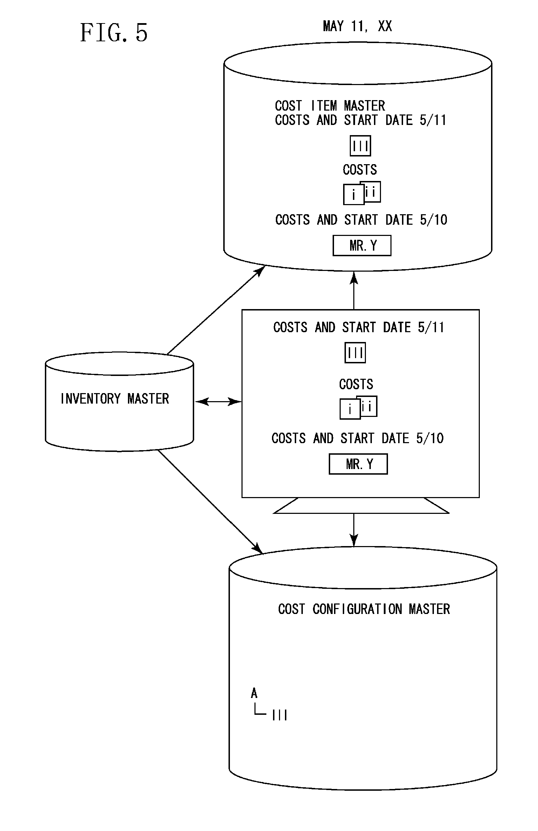

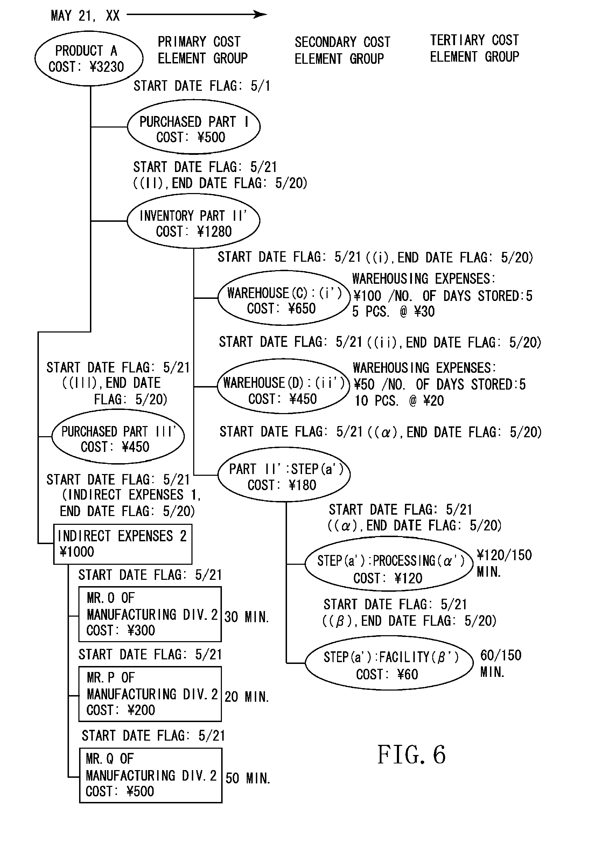

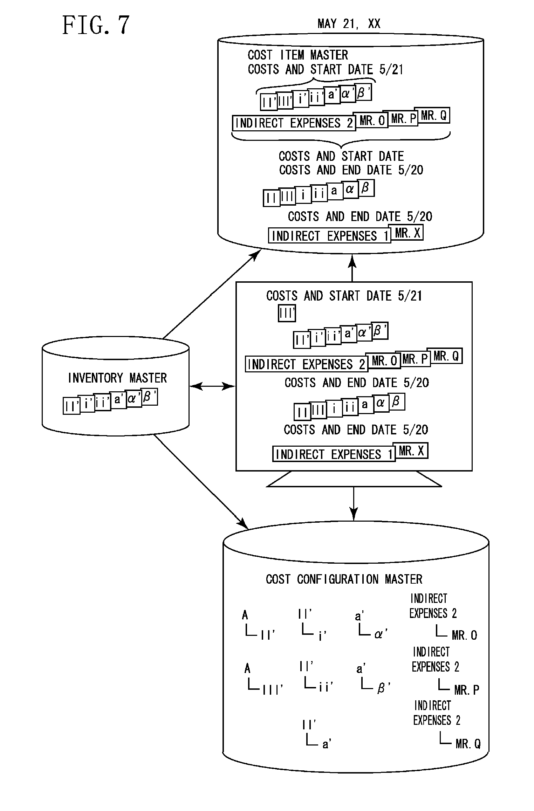

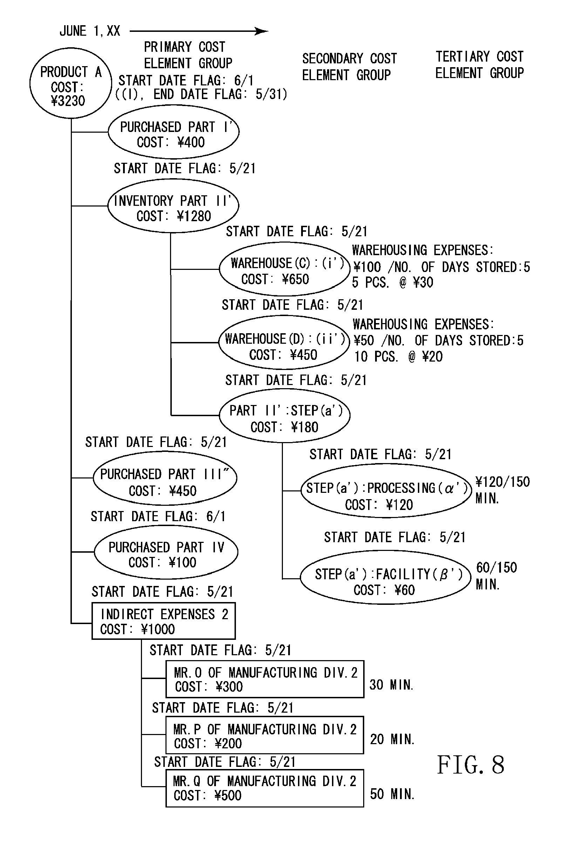

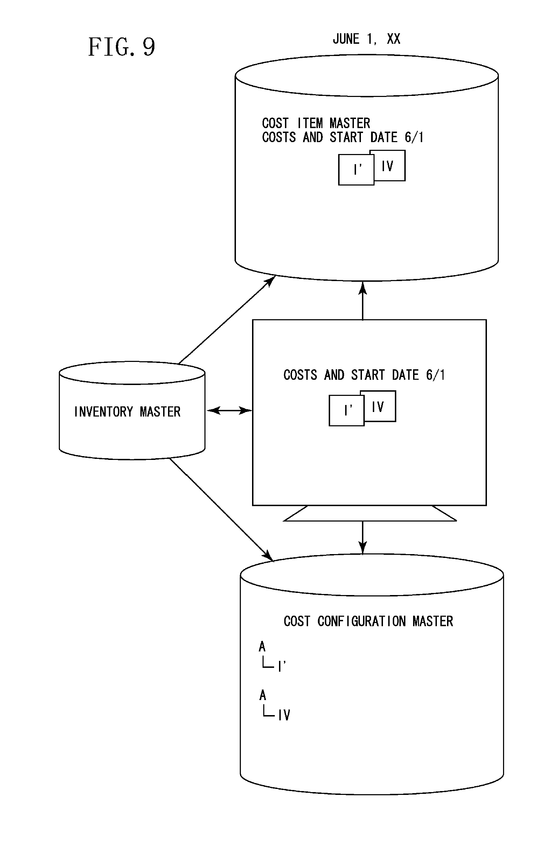

FIGS. 2, 4, 6, and 8 are diagrams chronologically illustrating exemplary hierarchically-structured databases for the cost of given product A. FIGS. 3, 5, 7, and 9 are schematic diagrams in which the cost item master 24 and the cost configuration master 25 have some cost elements memorized therein. FIG. 2 shows the hierarchically-structured database as of May 1, xx, FIG. 4 shows the hierarchically-structured database as of May 11, xx, FIG. 6 shows the hierarchically-structured database as of May 21, xx, and FIG. 8 shows the hierarchically-structured database as of June 1, xx. Note that FIG. 3 corresponds to FIG. 2, and FIG. 5 corresponds to FIG. 4. Also, FIG. 7 corresponds to FIG. 6, and FIG. 9 corresponds to FIG. 8. In this embodiment, it is premised that the cost element managing system 10 is operating on June 1, xx, and FIGS. 2, 4, and 6 show the hierarchically-structured databases in the past. In addition, the hierarchically-structured database for the cost of product A was first made on May 1, xx.

In the structural database shown in FIG. 2, product A is made from purchased part I and inventory part II. The cost of product A as of May 1, xx is equivalent to a value, ¥3,550, obtained by adding up the cost (¥500) of purchased part I, the cost (¥1,850) of inventory part II, and indirect expenses 1 (¥1,200). Purchased part I, inventory part II, and their costs, as well as indirect expenses 1, belong to the primary cost element group (a cost element group for the highest-level concepts). For part I, part II, and indirect expenses 1, the start date flag 5/1 (start indicator) that indicates a point at which they have been integrated into the hierarchically-structured database is set.

Inventory part II is composed of ten pieces of part (i) stored in warehouse (A), and five pieces of part (ii) stored in warehouse (B), and produced by step (a). The cost of inventory part II is equivalent to a value obtained by adding up the cost (¥1,100) of part (i), the cost (¥600) of part (ii), and the cost (¥150) of step (a). Part (i), part (ii), step (a), and their costs belong to the secondary cost element group (a cost element group for the concepts at the level immediately below the primary cost element group). For part (i), part (ii), and step (a), the start date flag 5/1 (start indicator) that indicates a point at which they have been incorporated into the hierarchically-structured database is set. As for part (i), the warehousing expenses are equivalent to ¥1,000 (daily warehousing expenses: Y100; number of days stored: 10), the material cost is Y100 (unit price: Y10), and the cost is ¥1,100. As for part (ii), the warehousing expenses are equivalent to Y500 (daily warehousing expenses: Y100; number of days stored: 5), the material cost is Y200 (unit price: Y20), and the cost is Y600.

Step (a) is composed of processing (α) and facility (β). As for processing (α), the processing time is 120 minutes, and the cost is Y100. As for facility (β), the operating time is 120 minutes, and the cost is Y50. Processing (α), facility (β), and their costs belong to the tertiary cost element group (a cost element group for the concepts at the level immediately below the secondary cost element group). For processing (α) and facility (β), the start date flag 5/1 (start indicator) that indicates a point at which they have been incorporated into the hierarchically-structured database is set. Indirect expenses 1 are composed of those of Mr. X of manufacturing division 1, and Mr. Y of manufacturing division 1. In the case of Mr. X, the labor time is 50 minutes, and the cost (indirect operation cost) is Y500. In the case of Mr. Y, the labor time is 70 minutes, and the cost (indirect operation cost) is ¥700. Mr. X and Mr. Y belong to the secondary cost element group (the cost element group for the concepts at the level immediately below the primary cost element group). For Mr. X and Mr. Y, the start date flag 5/1 (start indicator) that indicates a point at which they have been incorporated into the hierarchically-structured database is set.

In the hierarchically-structured databases shown in FIGS. 2, 4, 6, and 8, the cost elements are categorized into the primary to tertiary cost element groups, but the cost element groups are not limited to the primary to tertiary cost element groups, and the cost elements may be categorized into cost element groups beyond the tertiary cost element group. Note that the cost elements in FIGS. 2 to 9 are purchased part I, inventory part II, inventory part II', purchased part III, purchased part III', part (i), part (i'), part (ii), part (ii'), step (a), step (a'), processing (α), processing (α'), facility (β), facility (β'), indirect expenses 1, Mr. X of manufacturing division 1, Mr. Y of manufacturing division 1, indirect expenses 2, Mr. O of manufacturing division 2, Mr. P of manufacturing division 2, Mr. Q of manufacturing division 2, and their costs.

In the system 10, as shown in FIG. 3, product A, purchased part I, indirect expenses 1, Mr. X of manufacturing division 1, and Mr. Y of manufacturing division 1 are entered to the cost item entry area (not shown) via the input device 18, and their costs and start date 5/1 (start indicator) are respectively entered to the cost value entry area (not shown) and the start indicator entry area (not shown) via the input device 18. Product A, part I, indirect expenses 1, Mr. X, and Mr. Y, along with their costs and start date 5/1, are transferred and stored to the cost item master 24. Furthermore, inventory part II, part (i), part (ii), step (a), processing (α), and facility (β) are entered to the cost item entry area via the input device 18, and their costs and start date 5/1 (start indicator) are respectively entered to the cost value entry area and the start indicator entry area via the input device 18. Part II, part (i), part (ii), step (a), processing (α), and facility (β), along with their costs and start date 5/1, are transferred and stored to the cost item master 24. Product A, part I, Mr. X, and Mr. Y are new and arbitrary cost elements specified by new cost element items, and they are typed in with a keyboard or a ten-key unit, and stored to the main memory device 23. Indirect expenses 1 are a cost element specified by a cost element specifying item, and loaded from the main memory device 23. Part II, part (i), part (ii), step (a), processing (α), and facility (β) are data held by the inventory managing system 16, and in accordance with an output request from the system 10, they are outputted from the system 16 to the inventory master 26, and stored to the inventory master 26. Part II, part (i), part (ii), step (a), processing (α), and facility (β) are invoked from the inventory master 26 onto a liquid crystal display or a CRT, and entered to the cost item entry area. The number of days part (i) has been stored in warehouse A and the number of days part (ii) has been stored in warehouse B are counted by the inventory managing system 16, and the results are transferred and stored to the inventory master 26.

Next, systematic consolidated relationships for product A, part I, indirect expenses 1, Mr. X, Mr. Y, part II, part (i), part (ii), step (a), processing (α), and facility (β) are entered. At this time, only the relationships between those cost elements and cost elements within the next concepts at the level immediately therebelow are entered. Specifically, the systematic consolidated relationship with product A and part I within the concept at the level immediately therebelow, the systematic consolidated relationship between product A and part II within the concept at the level immediately therebelow, and the systematic consolidated relationship between product A and indirect expenses 1 within the concept at the level immediately therebelow are entered to the consolidated relationship entry area (not shown) via the input device 18. The consolidated relationships of product A with respect to part I, part II, and indirect expenses 1 are transferred and stored to the cost configuration master 25. Once the consolidated relationships are entered, product A and part I are correlated to each other, product A and part II are correlated to each other, and product A and indirect expenses 1 are correlated to each other. As a result, it becomes apparent that: part I, part II, and indirect expenses 1 are present as the concepts at the level immediately below product A; product A is composed of part I, part II, and indirect expenses 1; and the cost of product A is an addition of the cost of part I, the cost of part II, and indirect expenses 1.

The systematic consolidated relationship between part II and part (i) within the concept at the level immediately therebelow, the systematic consolidated relationship between part II and part (ii) within the concept at the level immediately therebelow, and the systematic consolidated relationship between part II and step (a) within the concept at the level immediately therebelow are entered to the consolidated relationship entry area via the input device 18. The consolidated relationships of part II with respect to part (i), part (ii), and step (a) are transferred and stored to the cost configuration master 25. Once the consolidated relationships are entered, part II and part (i) are correlated to each other, part II and part (ii) are correlated to each other, and part II and step (a) are correlated to each other. As a result, it becomes apparent that: part (i), part (ii), and step (a) are present as the concepts at the level immediately below part II; part II is composed of part (i), part (ii), and step (a); and the cost of part II is an addition of the cost of part (i), the cost of part (ii), and the cost of step (a).

The systematic consolidated relationship of step (a) with respect to processing (α) within the concept at the level immediately therebelow, and the systematic consolidated relationship of step (a) with respect to facility (β) within the concept at the level immediately therebelow are entered to the consolidated relationship entry area via the input device 18. The consolidated relationships of step (a) with respect to processing (α) and facility (β) are transferred and stored to the cost configuration master. Once the consolidated relationships are entered, step (a) and processing (α) are correlated to each other, and step (a) and facility (β) are correlated to each other. As a result, it becomes apparent that: processing (α) and facility (β) are present as the concepts at the level immediately below step (a); and step (a) is composed of processing (α) and facility (β) ; and the cost of step (a) is an addition of the cost of processing (α), and the cost of facility (β).

The systematic consolidated relationship between indirect expenses 1 and Mr. X within the concept at the level immediately therebelow, and the systematic consolidated relationship between indirect expenses 1 and Mr. Y within the concept at the level immediately therebelow are entered to the consolidated relationship entry area via the input device 18. The consolidated relationships of indirect expenses 1 with respect to Mr. X and Mr. Y are transferred and stored to the cost configuration master 25. Once the consolidated relationships are entered, indirect expenses 1 and Mr. X are correlated to each other, and indirect expenses 1 and Mr. Y are correlated to each other. As a result, it becomes apparent that: Mr. X and Mr. Y are present as the concepts at the level immediately below indirect expenses 1; indirect expenses 1 is composed of those of Mr. X and Mr. Y; and indirect expenses 1 is an addition of the cost for Mr. X, and the cost for Mr. Y.

In the system 10, consolidated relationships of a given cost element with respect to the third and subsequent cost elements from that given cost element toward the lowest level are not retained. Specifically, the consolidated relationships of product A with respect to part (i), part (ii), and step (a), and the consolidated relationships of part II with respect to processing (α) and facility (β) are not retained. When the cost elements are stored to the cost item master 24, and the relationships between the cost elements are stored to the cost configuration master 25, the system 10 automatically generates the hierarchically-structured database as of the date (May 1, xx) on which the cost elements have been stored, as shown in FIG. 2, in accordance with a hierarchically-structured database preparation request (database generation means). The system 10 memorizes the generated hierarchically-structured database as of May 1, xx to the main memory device 23 or the auxiliary memory device 17 (database memory means). In accordance with a hierarchically-structured database output request, the system 10 outputs the generated hierarchically-structured database as of May 1, xx via a liquid crystal display, a CRT, or a printer (database output means). The system 10 is capable of generating the hierarchically-structured database as of May 1, xx in real time at any time on or after May 1, xx, and is also capable of outputting the generated hierarchically-structured database as of May 1, xx in real time at any time via a liquid crystal display, a CRT, or a printer (database output means).

When compared to the hierarchically-structured database as of May 1, xx, the database as of May 11, xx, as shown in FIG. 4, includes purchased part III added as an element for forming product A (cost element modification means), as well as changed costs of part (i) and part (ii) (cost element modification means). Furthermore, Mr. Y has been deleted (cost element modification means). Other cost elements are the same as those in FIG. 2, and descriptions thereof will be omitted. In the structural database shown in FIG. 4, product A is made by purchased part I, inventory part II, and purchased part III. The cost of product A as of May 11, xx is equivalent to a value, Y4,000, obtained by adding up the cost (Y500) of purchased part I, the cost (Y2,600) of inventory part II, the cost (Y400) of purchased part III, and indirect expenses 1 (Y500). Part III belongs to the primary cost element group. For part III, the start date flag 5/11 that indicates a point of integration into the hierarchically-structured database is set. For Mr. Y, the end date flag 5/10 that indicates a point of exclusion from the hierarchically-structured database is set.

In the system 10, as shown in FIG. 5, purchased part III is entered to the cost item entry area via the input device 18, and its cost and start date 5/11 are respectively entered to the cost value entry area and the start indicator entry area via the input device 18. Part III, as well as its cost and start date 5/11, are transferred and stored to the cost item master 24. Part III is a new and arbitrary cost element specified by a new cost element item, and it is typed in with a keyboard or a ten-key unit, and stored to the main memory device 23. Next, the costs of part (i) and part (ii) are entered to the cost value entry area via the input device 18. The cost of part (i), and the cost of part (ii) are transferred and stored to the cost item master 24. Mr. Y is displayed and deleted on the screen of the output device 19, and the end date 5/10 is entered to the end indicator entry area via the input device 18. For Mr. Y and its cost, the end date is automatically set. Mr. Y as well as its cost and end date are stored to the cost item master 24 as memorized records for May 10.

In the system 10, the systematic consolidated relationship between product A and part III is entered to the consolidated relationship entry area via the input device 18. The consolidated relationship between product A and part III is transferred and stored to the cost configuration master 25. Once the consolidated relationship is entered, product A and part III are correlated to each other. As a result, it becomes apparent that: part III is present as the concept at the level immediately below product A; product A is composed of part I, part II, part III, and indirect expenses 1; and the cost of product A is an addition of the cost of part I, the cost of part II, the cost of part III, and indirect expenses 1. Note that memorized to the cost item master 24 as of May 11, xx are only part III and its cost and start date, the costs of part (i) and part (ii), as well as Mr. Y and its cost and end date (database memory means). Memorized to the cost configuration master 25 as of May 11, xx is only the consolidated relationship between product A and part III. That is, only portions of the hierarchically-structured database shown in FIG. 4 that are different from the hierarchically-structured database in FIG. 2 are memorized to the cost item master 24 and the cost configuration master 25. In addition, item and data, for which the start date flag (start indicator) has been set, are contained in the hierarchically-structured database from the present onward, unless the end date flag (end indicator) is set for them.

In the system 10, when Mr. Y is deleted from the cost item master 24, part III is stored to the cost item master 24, and the consolidated relationship between product A and part III is stored to the cost configuration master 25, the hierarchically-structured database as of May 1, xx is updated on the date (May 11, xx) at which they have been stored (database updating means). However, the hierarchically-structured database in FIG. 2 is stored in the main memory device 23 or the auxiliary memory device 17 as a memorized record, and is not deleted from the device 17, 23, unless the central processing unit 22 requests deletion. In accordance with a hierarchically-structured database preparation request, the system 10 automatically generates the hierarchically-structured database as of May 11, xx in FIG. 4 (database generation means). In accordance with a hierarchically-structured database output request, the system 10 outputs, in real time, the generated hierarchically-structured database as of May 11, xx via a liquid crystal display, a CRT, or a printer (database output means). In the system 10, the generated hierarchically-structured database as of May 11, xx can also be memorized to the main memory device 23 or the auxiliary memory device 17.

In the system 10, the hierarchically-structured database as of May 11, xx can be generated in real time at any time on or after May 11, xx, and the generated hierarchically-structured database as of May 11, xx can be outputted in real time at any time via a liquid crystal display, a CRT, or a printer (database output means). In addition, not only the hierarchically-structured database as of May 11, xx but also the hierarchically-structured database as of May 1, xx can be automatically generated in real time at any time, and the generated hierarchically-structured database as of May 1, xx can be outputted in real time via a liquid crystal display, a CRT, or a printer (database output means). Note that in order for the system 10 to generate the hierarchically-structured database as of May 1, xx, a hierarchically-structured database preparation request is made after entering any date between May 1, xx and May 10, xx to the time entry area (not shown).

When compared to the hierarchically-structured database as of May 11, xx, the database as of May 21, xx, as shown in FIG. 6, includes part II' and part III' for forming product A respectively changed from part II and part III (cost element modification means), as well as indirect expenses 2 changed from indirect expenses 1 (cost element modification means). As a result of changing part II to part II', part (i), part (ii), step (a), processing (α), and facility (β) have been respectively changed to part (i'), part (ii'), step (a'), processing (α'), and facility (β'). In addition, as a result of changing indirect expenses 1 to indirect expenses 2, Mr. X has been changed to Mr. O of manufacturing division 2, and Mr. P of manufacturing division 2 and Mr. Q of manufacturing division 2 have been added. Note that other cost elements are the same as those in FIG. 4, and descriptions thereof will be omitted.

In the structural database shown in FIG. 6, product A is composed of purchased part I, inventory part II', and purchased part III'. The cost of product A as of May 21, xx is equivalent to a value, ¥3,230, obtained by adding up the cost (¥500) of purchased part I, the cost (¥1,280) of inventory part II', the cost (¥450) of purchased part III', and indirect expenses 2 (¥1,000). Inventory part II', purchased part III' and their costs, as well as indirect expenses 2, belong to the primary cost element group. For inventory part II', purchased part III, and indirect expenses 2, the start date flag 5/21 that indicates a point at which they have been incorporated into the hierarchically-structured database is set. For the pre-modification cost elements: part II, part III, and indirect expenses 1, the end date flag 5/20 (end indicator) that indicates a point at which they have been excluded from the hierarchically-structured database is set.

Inventory part II' is composed of five pieces of part (i') stored in warehouse (C) and ten pieces of part (ii') stored in warehouse (D), and produced by step (a'). The cost of inventory part II' is equivalent to a value obtained by adding up the cost (¥650) of part (i'), the cost (¥450) of part (ii'), and the cost (¥180) of step (a'). Part (i'), part (ii'), step (a'), and their costs belong to the secondary cost element group. For part (i'), part (ii'), and step (a'), the start date flag 5/21 that indicates a point at which they have been incorporated into the hierarchically-structured database is set. For the pre-modification cost elements: part (i), part (ii), and step (a), the end date flag 5/20 (end indicator) that indicates a point at which they have been excluded from the hierarchically-structured database is set. As for part (i'), the warehousing expenses are ¥500 (daily warehousing expenses: ¥100; number of days stored: 5), the material cost is ¥150 (unit price: ¥30), and the cost is ¥650. As for part (ii'), the warehousing expenses are ¥250 (daily warehousing expenses: ¥50; number of days stored: 5), the material cost is ¥200 (unit price: ¥20), and the cost is ¥450.

Step (a') is composed of processing (α') and facility (β'). As for processing (α'), the processing time is 150 minutes, and the cost is ¥120. As for facility (β'), the operating time is 150 minutes, and the cost is ¥60. Processing (α'), facility (β'), and their costs belong to the tertiary cost element group. For processing (α') and facility (β'), the start date flag 5/1 (start indicator) that indicates a point at which they have been integrated into the hierarchically-structured database is set. For the pre-modification cost elements: processing (α) and facility (β), the end date flag 5/20 (end indicator) that indicates a point at which they have been excluded from the hierarchically-structured database is set. Indirect expenses 2 are composed of those of by Mr. O of manufacturing division 2, Mr. P of manufacturing division 2, and Mr. Q of manufacturing division 2. In the case of Mr. O, the labor time is 30 minutes, and the cost (indirect operation cost) is ¥300. In the case of Mr. P, the labor time is 20 minutes, and the cost (indirect operation cost) is ¥200. In the case of Mr. Q, the labor time is 50 minutes, and the cost (indirect operation cost) is ¥500. Mr. O, Mr. P, and Mr. Q belong to the secondary cost element group. For Mr. O, Mr. P, and Mr. Q, the start date flag 5/21 (start indicator) that indicates a point at which they have been incorporated into the hierarchically-structured database is set. For the pre-modification cost element Mr. X, the end date flag 5/20 (end indicator) that indicates a point at which it has been excluded from the hierarchically-structured database is set.

In the system 10, as shown in FIG. 7, purchased part III', indirect expenses 2, Mr. O of manufacturing division 2, Mr. P of manufacturing division 2, and Mr. Q of manufacturing division 2 are entered to the cost item entry area via the input device 18, and theirs costs and start date 5/21 are respectively entered to the cost value entry area and the start indicator entry area via the input device 18. Part III', indirect expenses 2, Mr. O, Mr. P, Mr. Q, and their costs and start date are transferred and stored to the cost item master 24. Next, the end date 5/20 for part II, the end date 5/20 for part III, and the end date 5/20 for indirect expenses 1 are entered to the end indicator entry area via the input device 18. The end dates are transferred and stored to the cost item master 24. Here, by changing part II to part II', and entering the end date 5/20 for part II, the cost elements within the concepts at the level immediately below part II: part (i), part (ii), step (a), processing (α), facility (β), and their costs, are automatically erased from the cost item master 24, and the end date 5/20 is automatically set for them. In addition, by changing indirect expenses 1 to indirect expenses 2, and entering the end date 5/20 for indirect expenses 1, the cost elements within the concepts at the level immediately below indirect expenses 1: Mr. X and its cost, are automatically erased from the cost item master 24, and the end date 5/20 is automatically set for them. Mr. X, as well as its cost and end date, are stored to the cost item master 24 as of May 20 as memorized records.

Indirect expenses 2 are a cost element specifying item, which is loaded from the main memory device 23 and entered to the cost item entry area. The cost of indirect expenses 2 and the start date 5/21 are respectively entered to the cost value entry area and the start indicator entry area via the input device 18. Indirect expenses 2, as well as its cost and start date, are transferred and stored to the cost item master 24. Mr. O, Mr. P, and Mr. Q are new and arbitrary new cost element items, which are entered to the cost item entry area via the input device 18. The costs for Mr. O, Mr. P and Mr. Q, and the start date 5/21 are respectively entered to the cost value entry area and the start indicator entry area via the input device 18. Mr. O, Mr. P, and Mr. Q, as well as their costs and start date are transferred and stored to the cost item master 24. Part II' and the cost elements within the concepts at the level immediately therebelow: part (i'), part (ii'), step (a'), processing (α), and facility (β'), are loaded from the inventory master 26, and entered to the cost item entry area. The costs of part (i'), part (ii'), step (a'), processing (α'), and facility (β'), and their start date 5/21 are respectively entered to the cost value entry area and the start indicator entry area via the input device 18. Part (i'), part (ii'), step (a'), processing (α'), facility (β'), and their costs and start date are transferred and stored to the cost item master 24. The number of days part (i') has been stored in warehouse C and the number of days part (ii') has been stored in warehouse D are counted by the inventory managing system 16, and the results are transferred and stored to the inventory master 26.

Next, the systematic consolidated relationship between product A and part II', the systematic consolidated relationship between product A and part III', and the systematic consolidated relationship between product A and indirect expenses 2 are entered to the consolidated relationship entry area via the input device 18. The consolidated relationships of product A with respect to part II', part III', and indirect expenses 2 are transferred and stored to the cost configuration master 25. Once the consolidated relationships are entered, product A and part II' are correlated to each other, product A and part III' are correlated to each other, and product A and indirect expenses 2 are correlated to each other. As a result, it becomes apparent that: part II', part III', and indirect expenses 2 are present as the concepts at the level immediately below product A; product A is composed of part I, part II', part III', and indirect expenses 2; and the cost of product A is an addition of the cost of part I, the cost of part II', the cost of part III', and indirect expenses 2.

The systematic consolidated relationship between part II' and part (i'), the systematic consolidated relationship between part II' and part (ii'), and the systematic consolidated relationship between part II' and step (a') are entered to the consolidated relationship entry area via the input device 18. The consolidated relationships of part II' with respect to part (i'), part (ii'), and step (a') are transferred and stored to the cost configuration master 25. Once the consolidated relationships are entered, part II' and part i' are correlated to each other, part III' and part ii' are correlated to each other, and part II' and indirect expenses 2 are correlated to each other. As a result, it becomes apparent that: part i', part ii', and step a' are present as the concepts at the level immediately below part II'; part II' is composed of part i', part ii', and step a'; and the cost of part II' is an addition of the cost of part i', the cost of part ii', the cost of part III', and the cost of step a'.

The systematic consolidated relationship between step (a') and processing (α'), and the systematic consolidated relationship between step (a') and facility (β') are entered to the consolidated relationship entry area via the input device 18. The consolidated relationships of step (a') with respect to processing (α'), and (β') are transferred and stored to the cost configuration master 25. Once the consolidated relationships are entered, step a' and processing α' are correlated to each other, and step a' and facility β' are correlated to each other. As a result, it becomes apparent that: processing α' and facility β' are present as the concepts at the level immediately below step a'; step a' is composed of processing α' and facility β'; and the cost of step a' is an addition of the cost of processing α', and the cost of facility β'.

The systematic consolidated relationship between indirect expenses 2 and Mr. O, the systematic consolidated relationship between indirect expenses 2 and Mr. P, and the systematic consolidated relationship between indirect expenses 2 and Mr. Q are entered to the consolidated relationship entry area via the input device 18. The consolidated relationships of indirect expenses 2 with respect to Mr. O, Mr. P, and Mr. Q are transferred and stored to the cost configuration master 25. Once the consolidated relationships are entered, indirect expenses 2 and Mr. O are correlated to each other, indirect expenses 2 and Mr. P are correlated to each other, and indirect expenses 2 and Mr. Q are correlated to each other. As a result, it becomes apparent that: Mr. O, Mr. P, and Mr. Q are present as the concepts at the lower level immediately below indirect expenses 2; indirect expenses 2 is composed of those of Mr. O, Mr. P, and Mr. Q; and indirect expenses 2 is an addition of the cost for Mr.O, the cost for Mr. P, and the cost for Mr. Q.

In the system 10, when part II', part III', indirect expenses 2, part (i'), part (ii'), step a', processing α', facility β', Mr. O, Mr. P, Mr. Q, and their costs are stored to the cost item master 24, the consolidated relationships of product A with respect to part II', part III', and indirect expenses 2, the consolidated relationships of part II' with respect to part (i'), part (ii'), and step a', the consolidated relationships of step a' with respect to processing α' and facility β', and the consolidated relationships of indirect expenses 2 with respect to Mr. O, Mr. P, and Mr. Q are stored to the cost configuration master 25, the hierarchically-structured database as of May 11, xx is updated on the date (May 21, xx) at which they have been stored (database updating means). However, the hierarchically-structured databases in FIGS. 2 and 4 are stored in the main memory device 23 or the auxiliary memory device 17 as memorized records, and therefore are not erased from the device 17, 23, unless the central processing unit 22 requests deletion. In accordance with a hierarchically-structured database preparation request, the system 10 automatically generates the hierarchically-structured database as of May 21, xx in FIG. 6 (database generation means). In accordance with a hierarchically-structured database output request, the system 10 outputs, in real time, the generated hierarchically-structured database as of May 21, xx via a liquid crystal display, a CRT, or a printer (database output means). In the system 10, the generated hierarchically-structured database as of May 21, xx can be memorized to the main memory device 23 or the auxiliary memory device 17.

In the system 10, the hierarchically-structured database as of May 21, xx can be generated in real time at any time on or after May 21, xx, and the generated hierarchically-structured database as of May 21, xx can be outputted in real time at any time via a liquid crystal display, a CRT, or a printer (database output means). In addition, not only the hierarchically-structured database as of May 21, xx but also the hierarchically-structured databases as of May 1, xx and May 11, xx can be automatically generated in real time at any time, and the generated hierarchically-structured databases as of May 1, xx and May 11, xx can be outputted in real time at any time via a liquid crystal display, a CRT, or a printer (database output means). Note that in order for the system 10 to generate the hierarchically-structured database as of May 1, xx, a hierarchically-structured database preparation request is made after entering any date between May 1, xx and May 10, xx to the time entry area (not shown). In order for the system 10 to generate the hierarchically-structured database as of May 11, xx, a hierarchically-structured database preparation request is made after entering any date between May 11, xx and May 20, xx to the time entry area (not shown).

When compared to the hierarchically-structured database as of May 21, xx, the database as of June 1, xx, as shown in FIG. 8, includes part I' for forming product A changed from part I, as well as purchased part IV added as a part for forming product A (cost element modification means). Other cost elements are the same as those in FIG. 6, and descriptions thereof will be omitted. In the hierarchically-structured database shown in FIG. 8, product A is composed of purchased part I', inventory part II', purchased part III', and purchased part IV. The cost of product A as of June 1, xx is equivalent to a value, ¥3,230, obtained by adding up the cost (¥400) of purchased part I', the cost (¥1,280) of inventory part II', the cost (¥450) of purchased part III', the cost (¥100) of purchased part IV, and indirect expenses 2 (¥1,000). Part I' and part IV belong to the primary cost element group. For part I' and part IV, the start date flag 6/1 that indicates a point at which they have been integrated into the hierarchically-structured database is set. For part I, the end date flag 5/31 that indicates a point at which it has been excluded from the hierarchically-structured database is set.

In the system 10, as shown in FIG. 9, purchased part I', and purchased part IV are entered to the cost item entry area via the input device 18, and their costs and start date 6/1 are respectively entered to the cost value entry area and the start indicator entry area via the input device 18. Part I', part IV, and their costs and start date are transferred and stored to the cost item master 24. Next, the end date 5/31 of part I is entered to the end indicator entry area via the input device 18. Part I, as well as its cost and end date, are transferred and stored to the cost item master 24.

The systematic consolidated relationship between product A and part I', and the systematic consolidated relationship between product A and part IV are entered to the consolidated relationship entry area via the input device 18. The consolidated relationships of product A with respect to part I', and part IV are transferred and stored to the cost configuration master 25. Once the consolidated relationships are entered, product A and part I' are correlated to each other, and product A and part IV are correlated to each other. As a result, it becomes apparent that: part I' and part IV are present as the concepts at the level immediately below product A; product A is composed of part I' and part IV; and the cost of product A is an addition of the cost of part I', the cost of part II', the cost of part III', the cost of part IV, and indirect expenses 2.

In the system 10, when part I', part IV, and their costs are stored to the cost item master 24, and the consolidated relationships of product A with respect to part I' and part IV are stored to the cost configuration master 25, the hierarchically-structured database as of May 21, xx is updated on the date (June 1, xx) at which they have been stored (database updating means). However, the hierarchically-structured databases in FIGS. 2, 4, and 6 are stored in the main memory device 23 or the auxiliary memory device 17 as memorized records, and therefore are not erased from the device 17, 23, unless the central processing unit 22 requests deletion. In accordance with a hierarchically-structured database preparation request, the system 10 automatically generates the hierarchically-structured database as of June 1, xx in FIG. 8 (database generation means). In accordance with a hierarchically-structured database output request, the system 10 outputs, in real time, the generated hierarchically-structured database as of June 1, xx via a liquid crystal display, a CRT, or a printer (database output means). In the system 10, the generated hierarchically-structured database as of June 1, xx can also be memorized to the main memory device 23 or the auxiliary memory device 17.

In the system 10, the hierarchically-structured database as of June 1, xx can be generated in real time at any time on or after June 1, xx, and the generated hierarchically-structured database as of June 1, xx can be outputted in real time at any time via a liquid crystal display, a CRT, or a printer (database output means). In addition, not only the hierarchically-structured database as of June 1, xx but also the hierarchically-structured databases as of May 1, xx, May 11, xx, and May 21, xx can be automatically generated in real time at any time, and the generated hierarchically-structured databases as of May 1, xx, May 11, xx, and May 21, xx can be outputted in real time at any time via a liquid crystal display, a CRT, or a printer (database output means). Note that in order for the system 10 to generate the hierarchically-structured database as of May 1, xx, a hierarchically-structured database preparation request is made after entering any date between May 1, xx and May 10, xx to the time entry area (not shown). In order for the system 10 to generate the hierarchically-structured database as of May 11, xx, a hierarchically-structured database preparation request is made after entering any date between May 11, xx and May 20, xx to the time entry area (not shown). In order for the system 10 to generate the hierarchically-structured database as of May 21, xx, a hierarchically-structured database preparation request is made after entering any date between May 21, xx and May 31, xx to the time entry area (not shown). In the system 10, the hierarchically-structured database as of May 1, xx, the hierarchically-structured database as of May 11, xx, the hierarchically-structured database as of May 21, xx, and the hierarchically-structured database as of June 1, xx can be generated in real time with at least one of the classifications from the primary to tertiary cost element groups, and the hierarchically-structured databases generated with at least one of the classifications from the primary to tertiary cost element groups can be outputted in real time.

In the system 10, the cost elements are classified into the primary to tertiary cost element groups, a plurality of hierarchically-structured databases as of different points between May 1, xx and June 1, xx can be constructed based on the cost elements, hierarchically-structured databases as of any given points between May 1, xx and June 1, xx can be generated in real time by the database generation means, and the generated hierarchically-structured databases can be outputted in real time by the database output means. The system 10 generates and outputs the hierarchically-structured databases as of any given points between May 1, xx and June 1, xx, making it possible to weigh, as necessary, the hierarchically-structured databases and the cost elements as of different points. The system 10 makes it possible to clarify systematic relationships between the cost elements based on the generated hierarchically-structured databases, and thereby to carry out suitable cost analysis based on the hierarchically-structured databases and the cost elements.

In the system 10, the database generation means is capable of generating, in real time, a hierarchically-structured database with at least one of the classifications from the primary to tertiary cost element groups, and the database output means is capable of outputting, in real time, the hierarchically-structured database generated with at least one of the classifications from the primary to tertiary cost element groups, so that an individual hierarchically-structured database with any necessary group(s) from among the primary to tertiary cost element groups can be generated and outputted. The system 10 makes it possible to clarify relative connections between the cost elements within the cost element groups based on the hierarchically-structured database, and thereby to carry out suitable and reliable cost analysis based on the hierarchically-structured database and the cost elements.

In the system 10, the start indicator that indicates a point at which the cost element has been integrated into the hierarchically-structured database and the end indicator that indicates a point at which the cost element has been excluded from the hierarchically-structured database are set for each cost element, thereby clarifying the points at which the cost element has been integrated into and excluded from the hierarchically-structured database, making it possible to identify a period during which a given cost element has been contained in the hierarchically-structured database, and thereby to reliably manage the hierarchically-structured databases and the cost elements chronologically from the past to the present based on the start indicator and the end indicator.

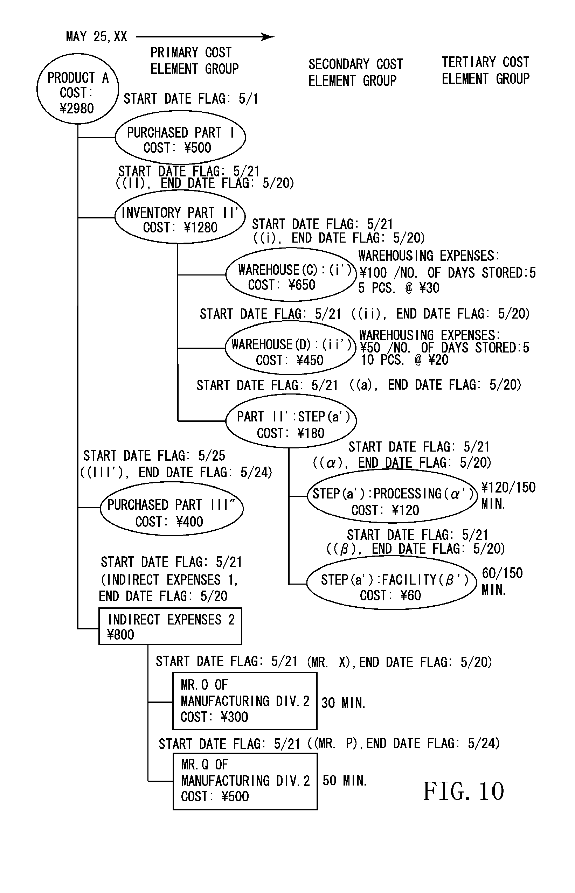

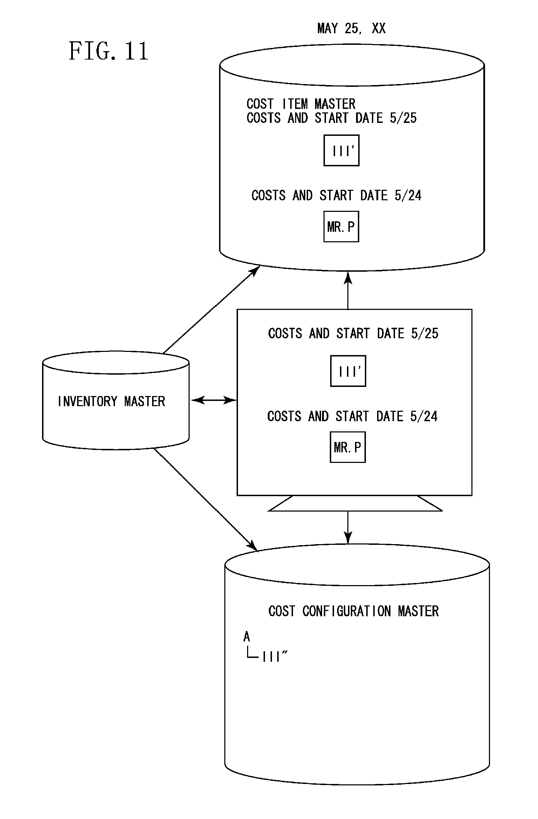

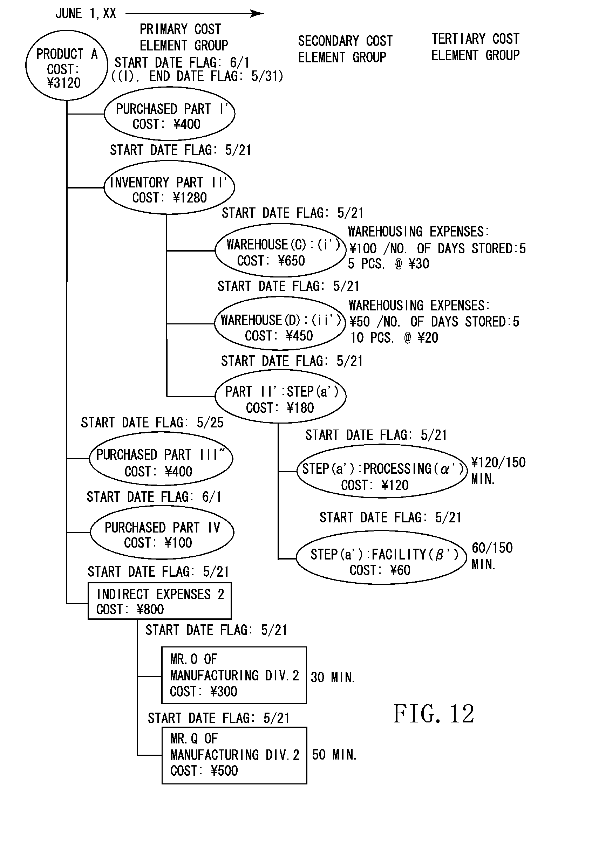

FIGS. 10 and 11 are respectively a diagram of a hierarchically-structured database in which cost elements have been modified retroactively from June 1, xx to May 25, xx, and a schematic diagram for the cost item master 24 and the cost configuration master 25 as of May 25, xx, and FIG. 12 is a diagram of the hierarchically-structured database as of June 1, xx, continued from FIG. 10. Note that FIG. 11 corresponds to FIG. 10. As of June 1, xx, as shown in FIG. 10, part III' for forming product A has been changed to part III" retroactively to May 25, xx, and Mr. P has been deleted (cost element modification means).

In the hierarchically-structured database shown in FIG. 10, product A is composed of purchased part I, inventory part II', and purchased part III". The cost of product A as of May 25, xx is equivalent to a value, ¥2,980, obtained by adding up the cost (¥500) of purchased part I, the cost (¥1,280) of inventory part II', the cost (¥400) of purchased part III", and indirect expenses 2 (¥800). Part III" belongs to the primary cost element group. For part III", the start date flag 5/25 that indicates a point at which it has been integrated into the hierarchically-structured database is set. For Mr. P, the end date flag 5/24 that indicates a point at which it has been excluded from the hierarchically-structured database is set. In the system 10, as shown in FIG. 11, purchased part III" is entered to the cost item entry area via the input device 18, and its cost and start date 5/25 are respectively entered to the cost value entry area and the start indicator entry area via the input device 18. Part III", as well as its cost and start date, are transferred and stored to the cost item master 24. Next, the end date 5/24 for part III' and Mr. P is entered to the end indicator entry area via the input device 18. Part III', Mr. P and their costs and end date are transferred and stored to the cost item master 24.

The systematic consolidated relationship between the systematic consolidated relationship between product A and part III" is entered to the consolidated relationship entry area via the input device 18. The consolidated relationship between product A and part III" is transferred and stored to the cost configuration master 25. Once the consolidated relationship is entered, product A and part III" are correlated to each other. As a result, it becomes apparent that: part III" is present as the concept at the level immediately below product A; product A is composed of part I, part II', and part III"; and the cost of product A is an addition of the cost of part I, the cost of part II', the cost of part III", and indirect expenses 2.

When the cost elements are modified retroactively to May 25, xx, the hierarchically-structured database as of June 1, xx is automatically modified accordingly. As of June 1, xx, as shown in FIG. 12, part III' has been changed to part III", and Mr. P has been deleted. In the hierarchically-structured database shown in FIG. 12, product A is composed of purchased part I', inventory part II', purchased part III", and purchased part IV. In the case where the cost elements have been modified retroactively to May 25,xx, the cost of product A as of June 1, xx is equivalent to a value, ¥3,120, obtained by adding up the cost (¥400) of purchased part I', the cost (¥1,280) of inventory part II', the cost (¥400) of purchased part III", the cost (¥100) of purchased part IV, and indirect expenses 2 (¥800).

In the system 10, when part III" and its cost are stored to the cost item master 24, and the consolidated relationship between product A and part III" is stored to the cost configuration master 25, the hierarchically-structured database as of May 21, xx is updated on the date (May 25, xx) at which they have been stored (database updating means). However, the hierarchically-structured databases in FIGS. 2, 4, 6, and 8 are stored in the main memory device 23 or the auxiliary memory device 17 as memorized records, and therefore are not erased from the device 17, 23, unless the central processing unit 22 requests deletion. In accordance with a hierarchically-structured database preparation request, the system 10 automatically generates the hierarchically-structured database as of May 25, xx in FIG. 10 or the hierarchically-structured database as of June 1, xx in FIG. 12 (database generation means). In accordance with a hierarchically-structured database output request, the system 10, in accordance with a hierarchically-structured database output request, the system 10 outputs, in real time, the generated hierarchically-structured databases as of May 25, xx and June 1, xx via a liquid crystal display, a CRT, or a printer (database output means). In the system 10, the generated hierarchically-structured databases as of May 25,xx and June 1, xx can be memorized to the main memory device 23 or the auxiliary memory device 17.

In the system 10, the hierarchically-structured databases as of May 25, xx and June 1, xx can be generated in real time at any time on or after June 1, xx, and the generated hierarchically-structured databases as of May 25, xx and June 1, xx can be outputted in real time at any time via a liquid crystal display, a CRT, or a printer (database output means). In addition, not only the hierarchically-structured databases as of May 25, xx and June 1, xx but also the hierarchically-structured databases as of May 1, xx, May 11, xx, and May 21, xx can be automatically generated in real time at any time, and the generated hierarchically-structured databases as of May 1, xx, May 11, xx, and May 21, xx can be outputted in real time at any time via a liquid crystal display, a CRT, or a printer (database output means). Note that in order for the system 10 to generate the hierarchically-structured database as of May 1, xx, a hierarchically-structured database preparation request is made after entering any date between May 1, xx and May 10, xx to the time entry area (not shown). In order for the system 10 to generate the hierarchically-structured database as of May 11, xx, a hierarchically-structured database preparation request is made after entering any date between May 11, xx and May 20, xx to the time entry area (not shown). In order for the system 10 to generate the hierarchically-structured database as of May 21, xx, a hierarchically-structured database preparation request is made after entering any date between May 21, xx and May 24, xx to the time entry area (not shown). In order for the system 10 to extract the hierarchically-structured database as of May 25, xx, a hierarchically-structured database preparation request is made after entering any date between May 25, xx and May 31, xx to the time entry area.

In the system 10, when the cost elements are retroactively modified, cost elements that have been present since the modification of the cost elements up to the present and are to be modified to accord with the modified cost elements are automatically modified, and therefore it is possible to freely modify the cost elements at a given point in the past or at the present, and thereby to construct hierarchically-structured databases at different points based on the modified cost elements. In the system 10, when a given cost element is retroactively modified, it is not necessary to individually modify all cost elements that have been present since the modification of the cost element up to the present and are associated with the cost element, and therefore it is possible to prevent an error from occurring due to individual modification of all the cost elements, and as well as to prevent the procedure from becoming complicated.

In the system 10, when a cost element that belongs to a high-level concept is retroactively modified, other cost elements within lower-level concepts that have been present since the modification of the cost element up to the present and are to be modified to accord with the modified cost element are automatically erased. For example, when step a' is deleted retroactively from June 1, xx to May 25, xx, processing α' and facility β' within the concepts at the level immediately therebelow are automatically deleted from the master 24, 25, and the end date flag 5/24 is automatically set for processing α' and facility β'. Accordingly, the cost elements within the concepts at the level immediately therebelow that are to be modified to accord with the modified cost element within the high-level concept do not remain in the system 10, and will not be contained in the hierarchically-structured database, and therefore it is possible to prevent any erroneous hierarchically-structured database from being generated during a period from the modification of the cost element up to the present.

## Claims

1. A cost element managing system for managing a plurality of cost elements to be included in costs using a computer resource, the cost elements being categorized from highest to lowest-level concepts,
wherein the cost elements are classified into primary to n-ary cost element groups in order from highest to lowest levels, such that the primary cost element group encompasses the highest-level concepts, and the n-ary cost element group encompasses the lowest-level concepts, and the cost elements classified into the primary to n-ary cost element groups are memorized in the system chronologically from past to present, and
wherein the system is capable of constructing a plurality of hierarchically-structured databases based on the cost elements memorized from the past up to the present, such that the cost elements are systematically related to one another in order from the primary to the n-ary cost element group, and the system comprises: database generation means for generating, in real time, a hierarchically-structured database as of any given point in the past or at the present; and database output means for outputting the generated hierarchically-structured database in real time.

2. The cost element managing system according to claim 1, wherein the database generation means is capable of generating, in real time, the hierarchically-structured database with at least one classification from among the primary to n-ary cost element groups, and the database output means is capable of outputting, in real time, the hierarchically-structured database generated with at least one classification from among the primary to n-ary cost element groups.

3. The cost element managing system according to claim 1 or 2, wherein a start indicator is set per cost element to indicate a point at which the cost element has been integrated into the hierarchically-structured database, and an end indicator is set for a cost element excluded from the hierarchically-structured database to indicate a point at which the cost element has been excluded from the hierarchically-structured database, so that the start indicator and the end indicator are used in the system to manage the hierarchically-structured databases and the cost elements chronologically from the past to the present.

4. The cost element managing system according to any of claims 1 thorough 3, wherein the system comprises cost element modification means for modifying the cost elements currently or retroactively, and when a cost element is retroactively modified by the modification means, cost elements that have been present since the modification of the cost element up to the present and are to be modified to accord with the modified cost element are automatically modified from the system.

5. The cost element managing system according to any of claims 1 through 3, wherein the system comprises cost element modification means for modifying the cost elements currently or retroactively, and when a cost element that belongs to a high-level concept is modified currently or retroactively by the modification means, cost elements within lower-level concepts that have been present since the modification of the cost element up to the present and are to be modified to accord with the modified cost element are automatically erased from the system.

6. The cost element managing system according to claim 4 or 5, wherein the modification of the cost element is addition to, changing, or deletion of the cost element.
